# EUROPEAN PATENT APPLICATION

(11) **EP 4 310 661 A1**
(43) Date of publication of application: **24.01.2024**
(21) Application number: 22186477.0
(22) Date of filing: 22.07.2022
(51) Int. Cl.: G06F 3/14, G09G 5/14, G09G 5/00

(54) **SERIALISED VIDEO TRANSMISSION**

(71) Applicant: Leica Instruments (Singapore) Pte. Ltd., 608924 Singapore (SG)
(72) Inventor: NEO, Wei Thiam, Singapore (SG)
(74) Representative: Zacco UK Ltd

(57) **Abstract**

An apparatus for combining a plurality of serialised video streams from different video sources for serialised onwards transmission over a channel and related aspects are disclosed. For example, the apparatus may comprise a receiver configured to separately receive each serialised video stream separate channel, a plurality of buffers each buffer arranged to buffer at least the active pixels of a received frame line of a serialised frame in a received video stream, one or more processor(s) or processing circuitry configured, for each group of active pixels in a completely received line of pixels in a received frame of a received serialised video stream to assign a video source indicator to that active pixel group and generate a data structure comprising the active pixel group which omits at least one blanking pixel from the same video line as the active pixel group, the source indicator assigned to that pixel group, and a frame line position indicator for that active pixel group, and a transmitter configured to onwardly transmit the generated data structures of both received serialised video streams as serialised video data over the common channel

## Description

The present disclosure relates to serialised video transmission, to an apparatus for and method of intermittently onwards transmitting serialised video frames lines received as a continuous pixel stream from at least one video source to a viewing apparatus, and to related aspects.

In particular, but not exclusively, the present disclosure relate to an apparatus configured to discard one or more blanking pixels from each received video frame line, which, after transmitting a group of pixels comprising active pixels and zero or more remaining blanking pixels from a video frame line pauses transmission until pixels of the next video frame line are ready for onwards transmission.

In particular, but not exclusively, some embodiments of the disclosed technology relates to a system where video from two or more sources are live streamed with minimal latency to one or more remote displays such as near-eye displays of a headset for synchronised low-latency output.

Some aspects and embodiments of the disclosed technology may be particularly useful, but are not limited to, use cases which require highly accurate and reliable live video streams from two or more separate asynchronous sources to be reconstructed at a receiver display with minimal latency. Such images may be used in various applications, particularly applications which provide some visual indication of perspective and/or depth in an image, such as may be provided by a stereoscopic display.

By way of example, some embodiments of the disclosed technology may have use in medical contexts such as for surgical procedures where a surgeon or similar medical operative is performing or assisting a surgical procedure whilst viewing live video footage displayed on a near-eye display or screen proximal to the operating site. Such displays may advantageously allow images of the patient being operated on where one or more image modes allow healthy tissue to be distinguished from unhealthy tissue, body parts and organs to be enhanced, and magnified views of specific areas being viewed and operated on.

Such use contexts, however, in addition to requiring any headset type of display to be light-weight and comfortable to wear, also require very low latency, high and stable synchronization of video feeds from at least two video sources. The synchronization of the images from different sources is extremely important as any loss of synchronisation or jitter in the live video streams may result in significant problems during surgery. For example, if a left-view near eye video stream is out of sync with a video stream comprising right-view near eye images. Even when video is being received from a single video source, it is also important to manage the data flow to avoid issues such as buffer overflow as the video is processed for onwards transmission from the source to display apparatus.

### BACKGROUND

Displays using liquid crystal display, LCD, panels may be designed to follow industry standard video standards like High Definition, HD, Ultra-High Definition, UHD. These standards demand strict adherence, they establish a set number of vertical and horizontal pixels in each vertical and horizontal line of a video frame and specify vertical and horizontal blanking intervals comprising "pixels" not intended for display, as well as specifying standards for transmission rates.

In a raster scan display, a vertical blanking interval, VBI, is the time between the end of the final visible line of a frame or field and the beginning of the next visible line of the next frame. Whilst modern thin panel displays such as liquid crystal displays and organic light emitting diode, OLED, displays do not require a blanking interval, for legacy reasons they are nonetheless configured to receive video streams which include blanking intervals comprising a number of blanking pixels. The terms "blanking pixel" or "blanking interval" are known in the art to comprise data not intended for display. In other words, a "blanking interval" or "blanking pixel" does not necessarily not carry any information.

Video standards also set strict requirements for transmission and clock synchronisation timings, for example, timings which in turn require the LCD panel receiver clock to be synchronized to a video source clock to ensure images are displayed properly. When a source video (for example, a video camera out video signal) is transported using a common standard like the serial digital interface, SDI, standard, the SDI signals are configured in a way that forwards the video source clock from the video source to the LCD panels for synchronization.

Each SDI cable is only able to forward the clock of a single video source. A problem accordingly exists when a single SDI cable is used to transmit video from two or more asynchronous video sources, such as, for example, may be particularly required for providing video footage which provides perspective views or depth.

A current solution is to provide an intermediate video frame buffer which decouples the input video clocks from each video source and synchronizes the SDI transmission to a single clock which is independent of either source. Adding an intermediate video frame buffer however may require a reconfiguration of hardware and increase latencies of the order of between one and two frame latencies in the output of video at the LCD panel display. This level of latency is undesirable when the video source is a live stream meant for interactive control, e.g. surgery. A similar latency issue can arise when video from a single source is displayed when this is routed via an intermediate hub for onwards transmission due to possible buffer overflow issues at the hub.

The disclosed technology seeks to mitigate, obviate, alleviate, or eliminate various issues known in the art which affect the transmission of one or more video streams to an LCD or LCD-type of display, such as, for example, those mentioned above.

### SUMMARY STATEMENTS

Whilst the invention is defined by the accompanying claims, various aspects of the disclosed technology including the claimed technology are set out in this summary section with examples of some preferred embodiments and indications of possible technical benefits.

A first aspect of the disclosed technology comprises an apparatus for processing a serialised stream of video data for onwards transmission, the serialised stream of video data comprising a plurality of serially transmitted video frames from a video source, each video frame comprising a plurality of frame lines, at least one frame line comprising a group of active pixels and one or more blanking pixels, the apparatus comprising a receiver configured to receive the serialised video data stream, memory arranged to buffer the received serialised video data until at least all of the active pixels of a frame line of pixels of a received video frame have been buffered, one or more processor(s) or processing circuitry configured, for each group of active pixels of a frame line of pixels, to generate a data structure comprising at least that active pixel group of the frame line and a frame line position indicator assigned to that active pixel group, each data structure comprising a group of active pixels from a received frame line and omitting at least one blanking pixel of that received frame line; and a transmitter configured to intermittently onwardly transmit the generated data structures by pausing transmission after each data structure has been transmitted until the next data structure is ready for transmission to start.

Advantageously, in some embodiments, latency delays may be reduced as instead of buffering the received data stream at the apparatus until an entire video frame has been received, the receiver buffer is configured to empty after each complete video frame line has been received without waiting for an entire video frame to be received.

In some embodiments, more than one blanking pixel is discarded from each received video frame line comprising a group of active pixels and at least one blanking pixel.

In some embodiments, none of the blanking pixels of received video frame lines are included in the outgoing serialised video stream comprising the onwardly transmitted data structures.

Advantageously, by removing one or more or all blanking pixels from each video frame line, the transmission times to reach the viewing apparatus of each video frame line are reduced as the number of blanking pixels subject to onwards transmission is reduced.

In some embodiments, the intermittently transmitted video data stream has a fixed frame line length with variable durations of transmission pauses.

Advantageously, by pausing transmission between pixel groups at the apparatus, any transmitter clock used to serialise video frames at the video source can be uncoupled from any receiver clock used at the viewing apparatus.

Advantageously, at the viewing apparatus, the variable durations of transmission pauses can be compensated for by adding a variable number of blanking pixels for output as a continuous stream of variable line length video data to the viewing apparatus.

In some embodiments, the variable number of blanking pixels is dependent on the duration of transmission of each onwardly transmitted data structure to the viewing apparatus.

In some embodiments, the assigned frame line indicator for each group of active pixels is included in a header of the data structure including that group of active pixels.

Another, second, aspect of the disclosed technology comprises a viewing apparatus comprising a receiver, the receiver being configured to receive an intermittently transmitted stream of serialised video comprising a plurality of data structures, each data structure comprising at least a group of active pixels from a video frame line and an assigned frame line position indicator for that group of active pixels, and one or more processors or processing circuitry configured to, for each received data structure, generate a complete line of video data by adding one or more blanking pixels to each active pixel group of the received data structure until a data structure comprising the next pixel group in the serialised video stream is received, and cause each complete line of video data to be output for presentation on a display at a position in a video frame indicated by the frame line position indicator assigned to the active pixels of that complete line of video data.

In some embodiments, the serialised video stream is received from the apparatus for processing a serialised stream of video data for onwards transmission according to the first aspect or any one of its embodiments disclosed herein, wherein the received intermittently transmitted stream of serialised video data is processed by the one or more processors or processing circuitry to add a variable number of blanking pixels for output as a continuous serialised variable line length video stream to the display.

In some embodiments, the viewing apparatus further comprises the display.

In some embodiments, the viewing apparatus may comprises more than one display and split the received video stream into two or more streams. One or more of the streams may be external to the viewing apparatus. For example, a large flat panel display may be used to display the same images as are being displayed on a near-eye display in some embodiments, for example, if the large screen can be driven in the same way as the near-eye display.

In some embodiments, the viewing apparatus includes the apparatus for processing a serialised video stream for onwards transmission according to the first aspect or any one of its embodiments disclosed herein.

Advantageously, reducing the number of transmitted blanking pixels may reduce the likelihood of buffer overflow at the receiving viewing apparatus.

Another, third, aspect of the disclosed technology comprises a method of processing a serialised video stream for onwards transmission, the method comprising receiving a serialised video stream, the serialised video stream comprising a plurality of serially transmitted video frames from a video source, each video frame comprising a plurality of frames, each frame comprising a plurality of frame lines comprising a group of active pixels and blanking pixels, buffering at least the active pixels of the received serialised video stream until a complete frame line of pixels has been received, and processing each buffered complete frame line of pixels by assigning a frame line position indicator to an active pixel group comprising the active pixels of that buffered complete frame line, and generating a data structure comprising that active pixel group including the frame line position indicator assigned to that active pixel group, each data structure comprising a group of active pixels from a received frame line and omitting at least one blanking pixel of that received frame line, onwardly intermittently transmitting outgoing serialised video data comprising the generated data structures when each data structure is ready for transmission, and pausing onwards transmission of the outgoing serialised video data between data structures.

For example, in some embodiments, the pausing of onwards transmission of the outgoing serialised video data comprises after transmitting a data structure comprising a group of active pixels and assigned frame line position indicator until the next data structure comprising a different group of active pixels with a different frame line position indicator is ready for transmission.

In some embodiments, wherein each data structure comprising a group of active pixels from a received frame line omits all of the blanking pixels of that received video frame lines in the outgoing serialised video stream comprising the onwardly transmitted data structures.

In some embodiments, the onwardly intermittently transmitted video data stream has a fixed frame line length and has variable durations of transmission pauses.

Another, fourth, aspect of the disclosed technology comprises a method of processing a received intermittent serialised video stream for display, the method comprising receiving a received serialised video stream comprising a plurality of data structures, each data structure comprising at least a group of active pixels from a video frame line and an assigned frame line position indicator for that group of active pixels, generating a complete line of video data by adding one or more blanking pixels to each active pixel group of a received data structure until a data structure comprising the next pixel group in the serialised video stream is received, and causing each complete line of video data to be output for presentation on a display at a position in a video frame indicated by the frame line position indicator assigned to the active pixels of that complete line of video data.

In some embodiments, the intermittent serialised video stream is received the apparatus for processing a serialised video stream for onwards transmission according to the first aspect or any of its embodiments disclosed herein.

In some embodiments, the received intermittently transmitted serialised video data is processed by the one or more processors or processing circuitry (1002) to add a variable number of blanking pixels for output as a continuous serialised variable line length video stream to the display

In some embodiments, the method further comprises determining the last but one frame line of a frame has been received, generating a frame line comprising blanking pixels as the last frame line of that frame, and outputting the frame lines of that frame as a serial data stream of pixels to a display.

Another, fifth, aspect of the disclosed technology comprises a computer program product comprising computer-code which when loaded from memory and executed by one or more processors of an aspect or any of the embodiments disclosed herein of the apparatus for processing a serialised video stream for onwards transmission causes the apparatus to implement any one of the disclosed aspects or embodiments of a method of processing a serialised video stream for onwards transmission.

Another, sixth, aspect of the disclosed technology comprises a computer program product comprising computer-code which when loaded from memory and executed by one or more processors of an aspect or any one of the embodiments disclosed herein of the viewing apparatus, causes the viewing apparatus to implement any one of the disclosed aspects or embodiments of a method of processing a received video stream.

Another, seventh, aspect of the disclosed technology comprises a signal generated by any one of the disclosed aspects or embodiments of the apparatus for processing a serialised video stream for onwards transmission, wherein the signal comprises the serialised video stream of data structures, each data structure comprising at least a group of active pixels from a video frame line and an assigned frame line position indicator for that group of active pixels.

In some embodiments, the outgoing serialised video stream comprising the onwardly transmitted data structures does not contain any blanking pixels.

In some embodiments, the outgoing serialised video stream comprising the onwardly transmitted data structures includes in each data structure at least one blanking pixel fewer than the number of blanking pixels of the received video frame line comprising the group of active pixels of that data structure.

Another, eighth, aspect of the disclosed technology comprises a video display system, wherein the video display system comprises an aspect or any one of the embodiments disclosed herein of the apparatus for processing a serialised video stream for onwards transmission and an aspect or any one of the embodiments disclosed herein of the viewing apparatus.

In some embodiments, the apparatus for processing a serialised video stream for onwards transmission further includes the video source.

In some embodiments, the viewing apparatus further includes at least one display configured to present video received from the video source via the apparatus.

Another, ninth, aspect of the disclosed technology comprises a computer-readable storage medium comprising computer-program code which, when executed by one or more processors or processing circuitry of an aspect or an embodiment disclosed herein of the apparatus for processing a serialised video stream for onwards transmission, causes the apparatus to implement an aspect or an embodiment disclosed herein of the method of processing a serialised video stream for onwards transmission.

Another, tenth, aspect of the disclosed technology comprises a computer program carrier carrying a computer program comprising computer-program code, which, when loaded from the computer program carrier and executed by one or more processors or processing circuitry of an aspect or an embodiment disclosed herein of the apparatus for processing a serialised video stream for onwards transmission causes the apparatus to implement an aspect or an embodiment disclosed herein of the method of processing a serialised video stream for onwards transmission, wherein the computer program carrier is one of an electronic signal, optical signal, radio signal or computer-readable storage medium.

Another aspect of the disclosed technology comprises means for performing a method according to any of the above disclosed method aspects.

Another, eleventh, aspect of the disclosed technology comprises an apparatus for combining a plurality of serialised video streams from different video sources for serialised onwards transmission over a channel, the apparatus comprising a receiver configured to separately receive each serialised video stream separate channel, a plurality of buffers, each buffer arranged to buffer at least the active pixels of a received frame line of a serialised frame in a received video stream, one or more processor(s) or processing circuitry configured, for each group of active pixels in a completely received line of pixels in a received frame of a received serialised video stream to assign a video source indicator to that active pixel group and generate a data structure comprising the active pixel group each data structure omitting at least one blanking pixel of that completely received frame line, the source indicator assigned to that pixel group, and a frame line position indicator for that active pixel group, and a transmitter configured to onwardly transmit the generated data structures of both received serialised video streams as serialised video data over the common channel.

In some embodiments, the video apparatus comprises a hub co-located with a surgical imaging device.

In some embodiments where the hub comprises a hub co-located with a surgical imaging device, the hub is configured to receive serialised video streams from two or more video sources, for example, left view and right view video sources.

In some embodiments, each video source comprises a camera and each camera is part of the surgical imaging device.

In some embodiments, the hub is, or is part of, a surgical imaging device comprising a surgical microscope.

In some embodiments, the hub is co-located with the surgical microscope.

In some embodiments, the hub is part of a control system or provided as another computational component or unit of the surgical microscope.

In some embodiments, the method further comprises assigning a frame line position indicator to each active pixel group prior to its onwards transmission, however, in alternative embodiments, the method may instead comprises retaining a frame line position indicator associated with an active pixel group..

In some embodiments, the transmitter pauses transmission after a data structure from one video source has been transmitted until the next data structure from another video source or from the same video source is ready for transmission to start.

In some embodiments, the received video data stream has a fixed line length and the transmission pause length between onwardly transmitted data structures varies.

In some embodiments, the transmitter onwardly transmits the generated data structures from the plurality of sources as a continuous stream of combined video data.

Advantageously, in some embodiments, latency delays may be reduced as instead of buffering the received data stream at the apparatus until an entire video frame has been received from one video source, the receiver buffers are configured to empty after each complete video frame line has been received without waiting for an entire video frame to be received.

Advantageously, by pausing transmission between pixel groups at the apparatus, any transmitter clock used to serialise pixels forming the video frame data at a video source can be uncoupled from any receiver clock used at the viewing apparatus to extract pixel data.

Advantageously, by decoupling the clock at the video source and viewing apparatus, transmission latency for the plurality of serialised video streams may reduce. In addition, the receiver circuitry may be simpler as there is no need to use a phase lock loop to derive the same frequency as the source. This allows the plurality of serialised video streams can be presented with better synchronicity when concurrently displayed.

In some embodiments, the video source indicator identifies a spatial relationship between at least two of the plurality of video sources.

In some embodiments, the plurality of serialised video streams comprise a video stream obtained from a video source for a left side view of a scene and a video stream obtained from a video source for a right side view of a scene, wherein the video source indicator identifies if a pixel group belongs to a frame of video obtained from a video source for the left side or right side view of the scene.

In some embodiments, the assigned video source indicator and the frame line position indicator are included in a header of a data structure and wherein the bit size of the header is matched to the parallel width of a serialiser of the transmitter configured to combine data structures from a plurality of different video sources into one outgoing serialised video stream.

In some embodiments, data structures from the two sources are interleaved by the serialiser in the outgoing serialised video stream.

In some embodiments, the transmitter is configured to pause onwards transmission between data structures after transmitting a data structure comprising a group of active pixels having a first video source indicator until a data structure having the same or a different video source indicator is ready for transmission.

In some embodiments, the interleaving alternates a data structure from one video source with a data structure from another video source in the outgoing serialised video stream, however, this may not always occur and one or more frame lines may be sent from one source consecutively if not other frame lines are available for transmission.

In some embodiments, at least one received serialised video stream is received over a channel having one or more of a different data rate and a different video resolution to the data rate or video resolution of at least one other channel via which another received video stream is received.

In some embodiments, none of the blanking pixels of received video frame lines are included in the outgoing serialised video stream comprising the onwardly transmitted data structures.

In some embodiments, however, one or more blanking pixels only are removed and any remaining blanking pixels of that received video frame line are included in an onwardly transmitted data structure of the outgoing serialised video stream.

Advantageously, by removing one or more or all blanking pixels from each video frame line, the transmission times to reach the viewing apparatus of each video frame line are reduced as the number of blanking pixels subject to onwards transmission is reduced. In addition the likelihood of buffer overflow at the receiver of the viewing apparatus may be reduced due to there being no need to buffer entire frames of video, instead only an entire line of a video frame is buffered at the transmitter before it is output. This, in addition with there being no or a reduced number of blanking pixels in the received transmission stream and/or if there is only intermittent transmission of the data structures the likelihood of buffer overflow at the combiner apparatus and at the viewing apparatus is reduced.

In some embodiments, the video combiner apparatus may decouple the source clocks of the received serialised video streams in the outgoing serialised video stream by varying the duration of pauses between onwardly transmitted data structures or by varying the duration of the transmission of the onwardly transmitted data structures.

In some embodiments, the transmitter is configured to transmit the outgoing serialised video stream over a data communications channel along a wired link and/or over a wireless data communications channel to an apparatus configured to cause a display of received video data.

In some embodiments, the weight of the viewing apparatus, for example, if a headset display, may be reduced by using only one wired link with the video combiner apparatus to carry serialised video data from the plurality of serialised video sources. This can make the headset less cumbersome for a wearer.

Another, twelfth, aspect of the disclosed technology comprises a viewing apparatus comprising a receiver configured to receive a serialised video stream comprising a plurality of data structures, each data structure comprising an active pixel group, a source indicator assigned to that pixel group, and a frame line position indicator assigned to that active pixel group and one or more processors or processing circuitry configured to generate a complete line of video data by adding one or more blanking pixels to each active pixel group of a received data structure until a data structure comprising the next pixel group in the serialised video stream is received and cause each complete line of video data to be output by for presentation on a display associated with the source indictor of that complete line of video at a position in a video frame indicated by the frame line position indicator assigned to the active pixels of that complete line of video data.

In some embodiments, a plurality of the complete frame lines of video data output to the one or more displays comprise variable line length video data, in other words, the video data output to the display does not have a fixed frame line length of active pixels and blanking pixels, as the number of blanking pixels may vary.

Advantageously, the variable frame line length video data allows the data output to the one or more displays to be continuous stream(s) of pixels and blanking pixels.

In some embodiments, the one or more displays comprises flat panel displays, for example, LCD or OLED technology based displays configured to receive serialised video data having a raster-type of display format.

In some embodiments, the received serialised video stream is received from an apparatus for combining a plurality of serialised video streams from different video sources for serialised onwards transmission over a channel according to the eleventh aspect or any of its embodiments disclosed herein.

In some embodiments, the video combiner apparatus further includes the video source.

In some embodiments, the viewing apparatus further includes at least one display configured to present video received from the video source via the apparatus.

Another, thirteenth, aspect of the disclosed technology comprises a method for combining a plurality of serialised video streams from different video sources, each serialised video stream being received over a different communications channel, for serialised onwards transmission over a channel, the method comprising separately receiving each one of the plurality of serialised video streams, separately buffering at least the active pixels of a received frame line of a serialised frame of each of the plurality of received video streams, processing each buffered group of active pixels in a completely received frame line by at least assigning a video source indicator to that active pixel group and generating a data structure comprising the active pixel group, an indicator for the video source of that pixel group, and a frame line position indicator for that active pixel group, and onwardly transmitting the generated data structure including buffered active pixels from a frame line of a video frame of one of the plurality of received serialised video streams over the common channel.

In some embodiments, the received intermittently transmitted serialised video data is processed by the one or more processors or processing circuitry of the viewing apparatus to add a variable number of blanking pixels for output as a continuous serialised variable line length video stream to the display.

In some embodiments, the method further comprises after each data structure has been transmitted, determining if another data structure from a video frame line of a video frame originating from another one of the plurality of video sources is ready for onwards transmission to start, and if so, onwardly transmitting the data structure from the other one of the plurality of video sources over the common channel or else determining if another data structure from the one of the plurality of video sources is ready for transmission and if so, onwardly transmitting the data structure from the one of the plurality of video sources over the common channel.

In some embodiments, after a data structure has been transmitted the method further comprises determining that there are no data structures from any of the plurality of video sources ready for transmission, pausing transmission until a data structure from a video source of the plurality of video sources is ready for transmission, and onwardly transmitting the data structure over the common channel.

In some embodiments, the method comprises intermittently onwardly transmitting as a single serialised video stream the generated data structures from each of received serialised video streams and pausing onwards transmission between data structures after transmitting a data structure comprising a group of active pixels and the assigned frame line position indicator until the next data structure comprising a different group of active pixels with a different frame line position indicator is ready for transmission.

In some embodiments, the combined intermittently transmitted video data stream has a fixed frame line length with variable durations of transmission pauses.

Another, fourteenth aspect of the disclosed technology comprises a method for viewing a plurality of serialised video streams received as a single serialised video stream, the method comprising receiving a serialised video stream comprising a plurality of data structures, each data structure comprising an active pixel group, a source indicator assigned to that pixel group, and a frame line position indicator assigned to that active pixel group, processing the received serialised video stream by generating a complete line of video data by adding one or more blanking pixels to each active pixel group of a received data structure until a data structure comprising the next pixel group in the serialised video stream is received, and causing each complete line of video data to be output by for presentation on a display associated with the source indictor of that complete line of video at a position in a video frame indicated by the frame line position indicator assigned to the active pixels of that complete line of video data.

In some embodiments, the method further comprises displaying each complete line of video data on the display.

In some embodiments, the received intermittently transmitted serialised video stream data may be video stream data intermittently transmitted by an aspect or one of the embodiments of a combiner apparatus disclosed herein.

In some embodiments of the method the received serialised video stream (622) is a video stream output by the a combiner apparatus according to the above combiner apparatus aspect or any one of its embodiments disclosed herein..

Another, fifteenth, aspect of the disclosed technology relates to a video display system, wherein the video display system comprises a video combiner apparatus according to the eleventh aspect or any of its embodiments disclosed herein and a viewing apparatus according to the twelfth aspect of any of its embodiments disclosed herein.

In some embodiments, the video combiner apparatus further includes the video source.

In some embodiments, viewing apparatus further includes at least one display configured to present video received from the video source via the apparatus.

A sixteenth aspect of the disclosed technology relates to a computer program product comprising computer-code which when loaded from memory and executed by one or more processors of an apparatus according to the eleventh aspect or any of its embodiments disclosed herein causes the apparatus to implement a method according to the thirteenth aspect.

An seventeenth aspect of the disclosed technology relates to a computer program product comprising computer-code which when loaded from memory and executed by one or more processors of a viewing apparatus according to the twelfth aspect or any of its embodiments disclosed herein causes the viewing apparatus to implement a method according to the fourteenth aspect or any of its embodiments disclosed herein.

Another aspect of the disclosed technology comprises a signal generated by an apparatus for combing video streams according to the eleventh aspect or any of its embodiments disclosed herein, wherein the signal comprises the serialised video stream of data structures, each data structure comprising at least a group of active pixels from a video frame line and an assigned frame line position indicator for that group of active pixels.

In some embodiments, the outgoing serialised video stream comprising the onwardly transmitted data structures does not contain any blanking pixels.

In some embodiments, the outgoing serialised video stream comprising the onwardly transmitted data structures includes in each data structure at least one blanking pixel fewer than the number of blanking pixels of the received video frame line comprising the group of active pixels of that data structure.

Another aspect of the disclosed technology comprises a method for viewing two or more serialised video streams received as a single serialised video stream, the method comprising receiving a first serialised video stream comprising a plurality of data structures, each data structure comprising an active pixel group, a source indicator assigned to that pixel group, and a frame line position indicator assigned to that active pixel group and processing the received serialised video stream by generating a complete line of video data by adding one or more blanking pixels to each active pixel group of a received data structure until a data structure comprising the next pixel group in the serialised video stream is received and causing each complete line of video data to be output by for presentation on at least one display, each of the at least one displays being associated with a source indictor of that complete line of video at a position in a video frame indicated by the frame line position indicator assigned to the active pixels of that complete line of video data.

In some embodiments, the method further comprises displaying each complete line of video data on the display.

In some embodiments of the method, the received serialised video stream is a discontinuous video stream output by the a combiner apparatus according to the above combiner apparatus aspect or any one of its embodiments disclosed herein.

Another aspect of the disclosed technology comprises means for performing a method according to any of the disclosed method aspects.

Another aspect of the disclosed technology comprises a computer program product comprising computer-code which when loaded from memory and executed by one or more processors of the video combiner apparatus according to the eleventh aspect or any of its embodiments disclosed herein causes the video combiner apparatus to implement a method according to the thirteenth aspect or any of its embodiments disclosed herein.

Another aspect of the disclosed technology comprises a computer program product comprising computer-code which when loaded from memory and executed by one or more processors of the viewing apparatus according to the twelfth aspect or any one of its embodiments disclosed herein, causes the viewing apparatus to implement any one of the disclosed aspects or embodiments of a method of processing a received video stream.

Another aspect of the disclosed technology comprises a signal generated by the apparatus according to the eleventh aspect or any of its embodiments disclosed herein, wherein the signal comprises the serialised video stream of data structures, each data structure comprising at least a group of active pixels from a video frame line and an assigned frame line position indicator for that group of active pixels.

In some embodiments, the outgoing serialised video stream comprising the onwardly transmitted data structures does not contain any blanking pixels.

In some embodiments, the outgoing serialised video stream comprising the onwardly transmitted data structures includes in each data structure at least one blanking pixel fewer than the number of blanking pixels of the received video frame line comprising the group of active pixels of that data structure.

Another aspect of the disclosed technology comprises a video display system, wherein the video display system comprises an apparatus according to the eleventh embodiment or any one of its embodiments disclosed herein and a viewing apparatus according to the twelfth aspect or any one of its embodiments disclosed herein.

In some embodiments, the apparatus for processing a serialised video stream for onwards transmission further includes the video source.

In some embodiments, the viewing apparatus further includes at least one display configured to present video received from the video source via the apparatus.

In some embodiments, the video display system further includes a plurality of video sources, each video source arranged to provide serialised video data to the apparatus according to the eleventh embodiment.

Another aspect of the disclosed technology comprises a computer-readable storage medium comprising computer-program code which, when executed by one or more processors or processing circuitry of an aspect or an embodiment disclosed herein of the video combiner, causes the video combiner apparatus to implement the method according to the thirteenth aspect or an embodiment of the method disclosed herein.

Another, tenth, aspect of the disclosed technology comprises a computer program carrier carrying a computer program comprising computer-program code, which, when loaded from the computer program carrier and executed by one or more processors or processing circuitry of an aspect or an embodiment disclosed herein of the video combiner apparatus causes the video combiner apparatus to implement a method according to the thirteenth aspect or an embodiment disclosed herein, wherein the computer program carrier is one of an electronic signal, optical signal, radio signal or computer-readable storage medium.

The disclosed aspects and embodiments may be combined with each other in any suitable manner which would be apparent to someone of ordinary skill in the art.

### BRIEF DESCRIPTION OF THE DRAWINGS

Some embodiments of the disclosed technology are described below with reference to the accompanying drawings which are by way of example only and in which:
Figure 1A show schematically how latency can build when there are two video sources each outputting a serialised video stream to an intermediate apparatus configured to buffer the received video streams frame by frame prior to onwardly transmitting a combined video stream to two remote displays according to the prior art;
Figures 1B to 1C show schematically how latency can build when there are two video sources each outputting a serialised video stream to an intermediate apparatus configured to buffer the received video streams line by line prior to onwardly transmitting a combined video stream to two remote displays according to the disclosed technology;
Figure 2A schematically illustrates an example of serial video frame transmission;
Figure 2B shows schematically an example of how a serially transmitted video frame may be displayed by an LCD display panel;
Figure 3A shows schematically an example of an apparatus according to some embodiments of the disclosed technology;
Figure 3B shows schematically an example of a method according to some embodiments of the disclosed technology;
Figure 4 shows schematically an example of serialised transmission of variable video frame lengths from a single video source according to some embodiments of the disclosed technology;
Figure 5 shows schematically how an apparatus according to Figure 3A generates a data structure header according to some embodiments of the disclosed technology;
Figure 6 shows schematically an example of a viewing apparatus according to some embodiments of the disclosed technology;
Figure 7 shows schematically a method performed by a viewing apparatus according to some embodiments of the disclosed technology;
Figure 8 shows schematically a system for displaying video from two video sources according to some embodiments of the disclosed technology;
Figure 9 shows schematically an example of serialised transmission of variable video frame lengths from a plurality of video sources to a plurality of displays according to some embodiments of the disclosed technology;
Figure 10 shows schematically an example of another method according to some embodiments of the disclosed technology;
Figure 11 shows schematically an example of how an apparatus generates a data structure header according to some embodiments of the disclosed technology; and
Figure 12 shows schematically another example of a viewing apparatus processes received video data according to some embodiments of the disclosed technology.

### DETAILED DESCRIPTION

Aspects of the present disclosure will be described more fully hereinafter with reference to the accompanying drawings. The apparatus and method disclosed herein can, however, be realized in many different forms and should not be construed as being limited to the aspects set forth herein. Steps, whether explicitly referred to a such or if implicit, may be re-ordered or omitted if not essential to some of the disclosed embodiments. Like numbers in the drawings refer to like elements throughout, however, the same or different embodiments may have the same or different numbering depending on which sheet they are first illustrated on in the drawings

The terminology used herein is for the purpose of describing particular aspects of the disclosure only, and is not intended to limit the disclosed technology embodiments described herein. As used herein, the singular forms "a", "an" and "the" are intended to include the plural forms as well, unless the context clearly indicates otherwise.

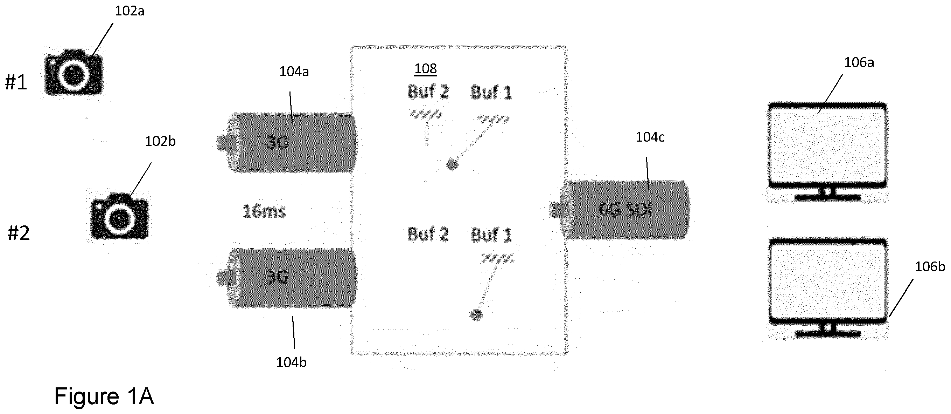

Figure 1A show schematically how latency can build when there are two video sources each outputting a serialised video stream to an intermediate apparatus configured to buffer the received video streams frame by frame prior to onwardly transmitting a combined video stream to two remote displays when complying with the serial data interface, SDI, video standard transmission requirements. In Figure 1A two asynchronous video sources #1, #2 of serialised video data streams are each outputting data over a separate 3G serialised video link to a combiner apparatus configured to merge the two streams into one outgoing serialised video stream for onwards transmission according to the SDI video standard over a 6 Gbit/s link to a viewing apparatus comprising two displays.

In Figure 1A, two video sources #1, #2 labelled 102a, 102b are both configured to generate video of a scene, in this example, they are both configured to capture a view of a swinging pendulum. As shown in Figure 1A, the video source #1, 102a, has output an image of a pendulum which is transmitted over a serialised data interface, SDI, link 104 towards a display 106a via a video combiner apparatus or hub 108 which combines the video from video source #1 with video of another pendulum from video source #2.

As shown in Figure 1A, a video frame received from video source #1 is shown stored in a buffer (the upper Buf 1 in Figure 1A) at the hub 108. However, as video source #2 102b, is either running at a slightly lower clock speed for transmitting video or due to the link 104b being slower, its transmission of the frame of the other pendulum arrives slightly later at the hub 108. As the hub is configured to wait until both frames are completely received from both sources before any onwards transmission of either frame, the result shown in Figure 1A is for a frame and a half from video source #1 to be buffered in the top row of buffers Buf 1 and Buf 2 at the hub 108 before the lower buffer Buf 1 holds a whole image of the same pendulum from video source #2.

As both image frames must have been completely received at the hub 108 before the line by line onwards transmission to the respective displays takes place as the combiner box cannot lock to a clock of either source, the buffers at the hub 108 will accumulate at different rates to compensate for the differences in asynchronous transmission between the two video sources before the video can be onwardly transmitted. This increases latency at the hub 108.

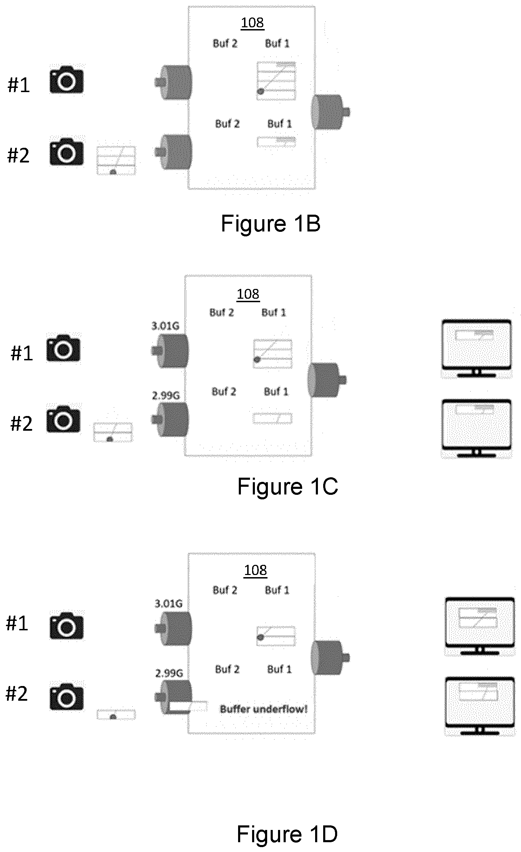

One way of reducing the latency could be to configure the hub 108 to only buffer incoming video line by line. Figures 1B to 1C show schematically how if such an approach is used to try to reduce latency build up at the hub 108, in other words how, if the hub 108 outputs video line by line from two asynchronous video sources, it can lead to a problem of buffer underflow at the hub 108.

Figures 1B to 1D show schematically a sequence of examples of what happens at the hub 108 if the hub buffers are configured to not wait for a complete frame to be received from both sources at the hub apparatus before onwardly transmitting the frames line by line to the displays 106a,106b. In Figures 1B to 1D the hub 108 instead onwardly transmits received video from the two sources #1, #2 line by line to the displays 106a, 106b.

At first, as shown in Figure 1B the received video streams from the two asynchronous video sources may remain sufficiently synchronised so that when a video frame from source #1A has been received by the top Buf 1 at the hub 108, there is already the first full line of a frame from source #B in the lower buffer Buf 1 at the hub. Figure 1C shows how transmitting line by line as they are received at the hub 108 reduces the delay for displays 106a, 106b to receive the first line of their respective video frames. However, as the two sources are asynchronous, eventually, there is a situation where only one line can be sent from one video source, here source #1, as there is buffer underflow at the hub 108 for the video from the other video source (source #2) as shown in Figure 1D. In other words, the lower buffers Buf 1 and Buf 2 in Figure 1D are both empty.

Accordingly, to avoid the risk of buffer underflow, it is desirable to buffer complete frames at the hub 108 prior to sending any of the frame lines to the remote displays.

Some embodiments of the disclosed technology seek to provide another solution which can reduce latency and which reduces the risk of buffer underflow even when the hub 108 is configured to onwardly transmit received video data line by line. In some embodiments, similar latency reductions can be obtained even when only one video stream is received from a single video source.

Each line of a video frame at a video source comprises a number of active pixels, where an active pixel represents a pixel which will be reproduced on the remote display and a number of blanking pixels, which are added to generate a continuous stream of data. The blanking pixels form a blanking interval and are a historic convention to allow time for a raster scan or cathode ray tube, CRT, type of display to revert back to the beginning of the physical display to start the next line of the image after ending the previous line, and at the end of the last line of active pixels of a frame, a line of blanking pixels was added to allow the CRT beam to move physically to the start of the top line of the next frame. This convention remains for other types of displays including flat panel displays comprising, for example, organic light emitting diode, OLED, and LCD, liquid crystal displays or light coupled device technology-based displays. References to a display herein refer to a display configured to receive data from a video source which includes blanking pixels. A viewing apparatus may comprise one or more displays and may include one or more processors for processing received serialised video data streams for output to a display.

The term "blanking" used herein means only "not intended for display as part of the video image frame line" and not necessarily that no data or information at all is contained in the "blanking interval" pixels. In the prior art, each pixel of a received serialised video data stream, regardless of whether an active pixel intended for display or a blanking pixel not intended for display, is transmitted at the clock frequency of the video image source 102 along a data link 104 according to standard techniques.

When there is just one video source, buffer underflow or overflow at the hub 108 or at any viewing apparatus having one or more display(s) 106 is usually eliminated by design. However, at high data transfer speeds, particularly if there are two sources, the possibility of buffer under or overflow may increase as describe above where the two sources are asynchronous. Where the latency delays which result from frame by frame buffering at the hub 108 are not acceptable, accordingly, it is advantageous if the hub 108 can buffer line by line and onwardly transmit video for display line by line.

For example, frame buffered serialised video data transmission speeds of the order of 10s of milliseconds to transmit video via hub 108 may encounter latencies of the order of 16 milliseconds from the start of the image transfer at the source 102 to the display of the transferred image on the remote display 108. This is too high for use cases such as, for example, when a medical procedure is being conducted using cameras to capture an image of a body region undergoing the medical procedure and a near-eye display or headset is being worn by the surgeon or one or more assistants performing or assisting the medical procedure. Accordingly, it is desirable for there to be improvements in how a hub apparatus or the like is able to process received serialised video stream data to reduce any additional latencies or delays from occurring so that the time from when an image is captured to when it is displayed on a display 106 is further reduced and preferably minimised.

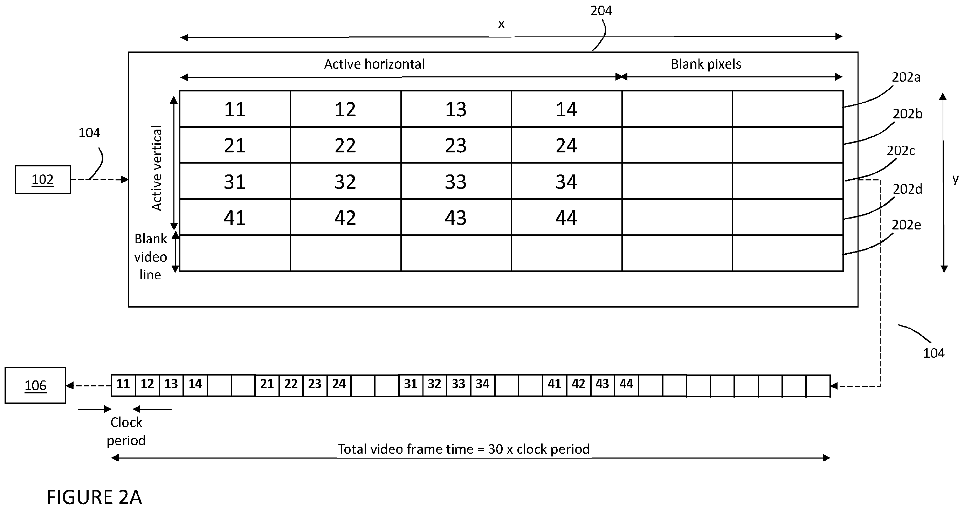

Figure 2A of the accompanying drawings illustrates schematically in more detail how a fixed line length video frame is transmitted over a frame by frame transmission standard link 104, for example, a serial data interface, SDI, transport link 104 such as a wired link from a video source 12, such as a video camera, to a remote display 106. Figure 2A shows schematically the active pixels of the video frame 100 as boxes with numbers and the blank or blanking pixels as blank boxes. Figure 2A also shows schematically how each frame in addition to comprising a number of lines, of which just four 202a-202d are shown by way of example, in Figure 2A, may also end with a blank or blanking video line 202e.

Each video frame 204 comprises a fixed number y of horizontal lines of pixels and a fixed number x of vertical columns of pixels, which are usually set according to a particular video standard specification. By way of example only in the accompanying Figures, and as shown in in Figure 2A, y = 5 and x = 6. This means that in the example illustrated in Figure 2A, so each source video frame 204 comprises 30 pixels, comprising 5 lines each of 6 pixels, 4 of which are active pixels and 2 of which are blanking pixels, and each vertical line comprises 5 pixels, 4 of which are active.

As shown in Figure 2A, each video frame in the serialised video stream over link 104 from the video source 102 has a vertical blanking interval of 1 line and a horizontal banking interval of 2 pixels. The lower section of Figure 2A shows how each group of pixels comprising active and blanking pixels forms a horizontal line of the video frame 100 and illustrates how the video frame 100 is serially transmitted horizontal frame line by horizontal frame line as a continuous stream of data over the SDI transport link 104 to a remote display 106. The time to serialise each video frame comprising 30 pixels is determined by the clock period to transmit each pixel multiplied by the number of pixels in each video frame, so in this example 30 x the clock period.

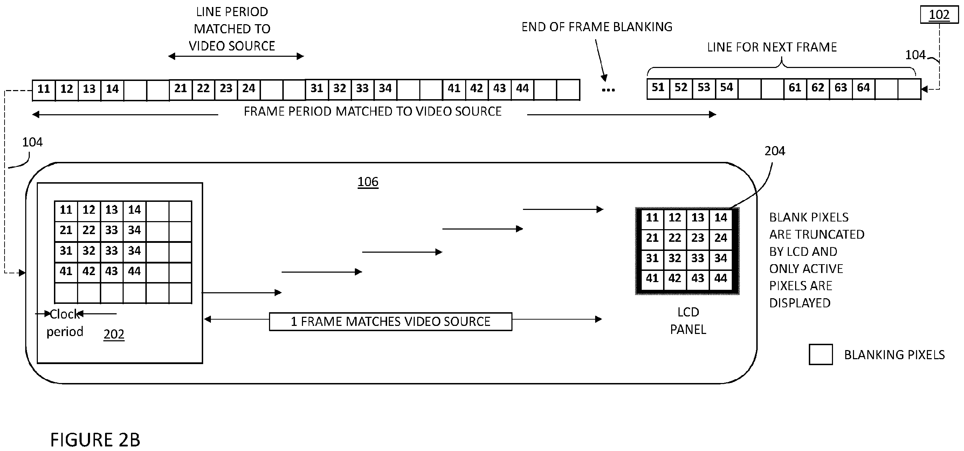

Figures 2A and 2B shows in more detail how the top line 202a is transmitted first with the active pixels being transmitted before any blanking pixels, then the next line 202b, and the 3^{rd} line 202c, and the last line 202d, with the final line 202e comprising only blanking pixels which are transmitted last. After the blanking pixel line 202e is transmitted, transmission of the next image frame starts with that frame's first horizontal line, then the 2^{nd},3^{rd}, 4^{th} and finally the blanking line of that next video frame, and the process iterates whilst video data is generated by the video source 202.

As mentioned above, each pixel takes a certain amount of time to transmit, determined by the clock period used by the video source 102 to transmit the video. If the video source clock frequency is 1 pixel per clock period, with, by way of example only, a clock period of 1 µs, each pixel will take 1 µs to be prepared for transmission. Horizontal lines 202a-202e each comprise 6 pixels and so each line takes 6 µs for prepare for transmission. As the video frame 204 has five lines 202a-202e, the total time to serialised the entire video frame 204 for transmission along the SDI link 104 is 30 µs.

When a video stream from a video source 102 is transported to a display 106 such as a LCD panel display over a SDI transport link 104, the LCD panel at the remote display 106 will need to synchronise the start of each received line 202a-202d in order to reconstruct frame 204 so that it is displayed properly. Metadata is provided for a group of pixels of each video frame line to provide information enabling a display 106 to correctly present an image carried by the serialised video frame data.

Figure 2B shows schematically an example of how the serially transmitted video frame shown in Figure 2A is processed for display in more detail at the display 106. In the example shown in Figure 2B the video source 102 of the serialised video data stream provides a sequence of lines of fixed length. The received video stream processed at receiver 202 of the display 106 which forwards each line of data as it is received for display on a screen 204, for example, for display on a LCD panel 204. The clock period of the video source 102 is used to synchronize the pixel columns when these are displayed. This requires the clock at the display 106 to be locked in frequency to the frequency as the video source clock used to send the pixel data over the SDI link 104. For example, if the source clock period is 1 µs, then the display video clock frequency must have a clock period based on the source clock period. By locking the display clock frequency to the source clock frequency, it allows, as Figure 2B shows schematically, the 1^{st} column of pixels in each frame such as frame 204 when reconstructed on the LCD panel 204 to be aligned vertically. If the timing of the two clocks is incorrect, there could be buffer overflow or underflow depending on the extent to which the two clocks are out of sync with each other.

As a result, in order to correctly display the captured image on a display 106 in the example display system shown in Figures 2A and 2B, there can be no decoupling of the source clock from the display clock. This imposes various constraints on the design of a display system comprising at least one video source and at least one video display. Firstly, only one source clock frequency can be physically forwarded using a transmitted serialised video data stream over each SDI link 14, limiting each video data stream to providing video captured by a single video source 102.

One example of how this can create a problem is when it is desirable to reduce the number of cables, for example, if the hub 108 is attached to a headset viewing apparatus comprising one or more displays 106 to reduce the level of cumbersomeness of the viewing apparatus. Secondly, for example, any processing of the video stream received at an intermediate apparatus or hub to add a video overlay or similar effect, such an image enhancement, which results in two video streams being generated cannot be transmitted from the hub 108 to the display 106 using the same video link. Moreover, the transmission delays may mean that even if transmitted line by line, the latency of displaying real-time streamed video can cause problems in some embodiments where there is a dependency on the real-time streamed video for performing actions. An example of such a context of use is video surgery where a surgeon or similar operative uses a head-set with a near-eye display to receive enhanced views of a person or animal being operated on.

Such a use context, moreover, may benefit from a stereoscopic display where an image presented provides depth perception. In this example embodiment, an image may be reconstructed on one or two near-eye displays of a head-set viewing apparatus. Each display may receive a video stream from a separate source, and one or both video streams may be subject to additional processing at an intermediate apparatus to add, for example, image enhancement in the form of colour overlays and the like. Unwanted latency, jitter, and different frame rates may cause the displayed images to lose synchronicity even if the images are originally captured by two or more video sources which are synchronised.

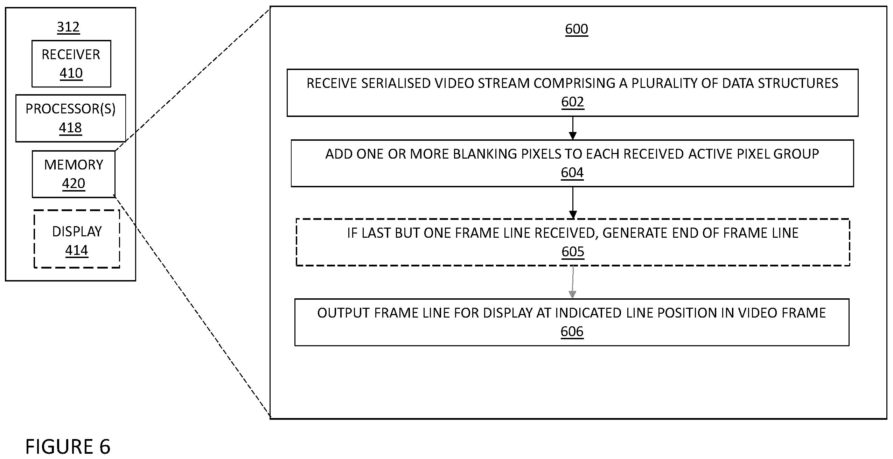

In general, if two video sources require their images to be synchronised when displayed remotely, two separate feeds may need to be provided and even then, an additional mechanism is needed to ensure the reconstructed video frames are suitably aligned, and this can add additional latency. By way of example, if two or more video sources are to be provided to a viewing apparatus comprising displays, such as left and right eye displays in a near-eye display headset, the video sources cannot share the single SDI cable as their source clock frequencies will never be exactly the same, meaning the images displayed on each display will not be synchronised. However, it is undesirable to have two separate cables on such devices, due to the increased cumbersomeness and extra weight of the resulting headset. Figure 6 described in more detail below shows an example embodiment where video is provided from two or more video sources.

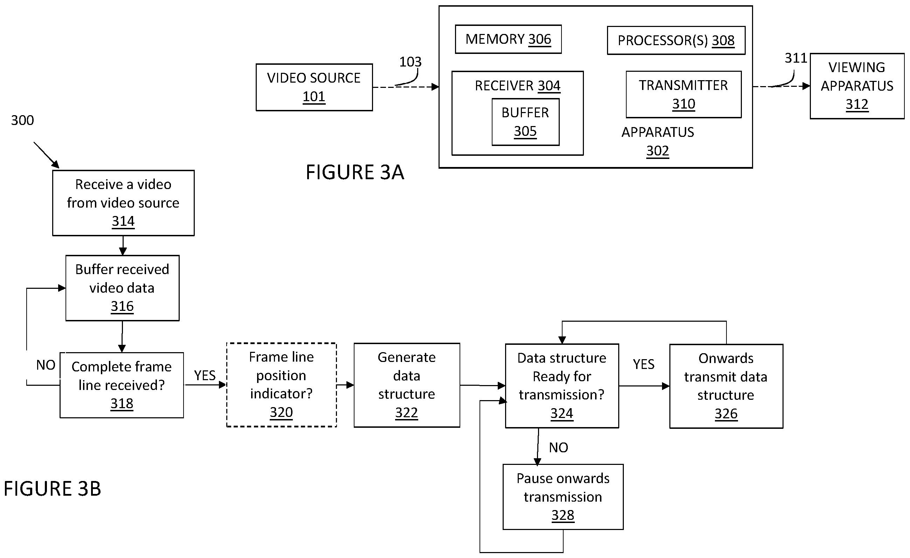

Figure 3A shows schematically an example of an apparatus 302 for processing a serialised video stream. The apparatus 302 may comprise a hub co-located with a surgical imaging device in some embodiments. In some embodiments where the apparatus 302 comprises a hub co-located with a surgical imaging device, and is configured to receive serialised video streams from one or more video sources, the video sources may comprise one or more cameras which are part of the surgical imaging device. In some embodiments, the apparatus 302 is or is part of a surgical imaging device comprising a surgical microscope. The hub may be co-located with the surgical microscope and/or may be part of a control system or provided as other computational component or unit of the microscope in some embodiments.

The apparatus 302 comprises a receiver 304 configured to receive serialised video streams a single video source 101 over a serialised video data link 103. Instead of onwardly transmitting a continuous stream of video data which could be used to align the source clock to the display clock, however, according to the disclosed technology, the apparatus 302 decouples the source and display clocks by generating a discontinuous stream of serialised video data. The discontinuous stream of serialised video data comprises, for each horizontal line of a video frame, at least the active groups of pixels, followed by a pause in transmission. In some embodiments, for each received video frame line comprising at least a group of active pixels, at least one blanking pixel is omitted when onwardly transmitting the group of active pixels. This reduces the time to transmit a video frame as there are fewer blanking pixels to transmit. Instead, the transmitter may pause transmission until the next complete line of pixels comprising active pixels and blanking pixels has been buffered, at which point the buffer empties and the transmitter transmits that group of active pixels and omits at least one blanking pixel. In some embodiments, one or more blanking pixels are omitted. The number of blanking pixels which are forwarded or omitted is fixed for all video lines in some embodiments. After transmitting a data structure comprising an active group of pixels from a received video frame line and any blanking pixels from that received frame line which are not omitted from being onwardly transmitted, the transmitter is configured to wait until the until the next line of video frame data is ready for transmission. This creates a pause in transmission and results in a discontinuous stream of intermittently transmitted serialised video frame data being transmitted over a serialised video transmission link to a viewing apparatus 410. Removing one or more blanking pixels from the end of each horizontal line of a video frame and/or by removing or reducing the blanking pixels which form the last line of blanking pixels in each video frame results in intermittent transmission of the serialised video data and allows the clock of the remote viewing apparatus to be decoupled from the clock of the video source 101.

In Figure 3A, the received serialised video frame data is buffered line by line by a buffer 305 which is configured to discard one or more blanking pixels in each variable line length of a video frame and to forward at least the active pixels of each completely received video line to the transmitter 310 as a group of pixels with a regular line length. By removing at least one blanking pixel from each line received by the apparatus 302 from the source 101, the transmitter of the apparatus 302 decouples the onwards transmitted data from the video source clock, which allows the receiver clock to be reset accordingly.

Some embodiments of the apparatus 302 comprise an apparatus for processing a serialised stream of video data for onwards transmission, for example, to the viewing apparatus 312. The serialised stream of video data may comprise a plurality of serially transmitted video frames from a video source, each video frame comprising a plurality of frame lines, at least one frame line comprising a group of active pixels and one or more blanking pixels.

The apparatus may comprise a receiver 304 configured to receive the serialised video data stream, memory 306, which may comprise memory 305 arranged to buffer the received serialised video data until at least all of the active pixels, of a frame line of pixels of a received video frame have been buffered, one or more processor(s) or processing circuitry 308 configured, for each group of active pixels of a frame line of pixels, to generate a data structure comprising at least that active pixel group of the frame line and a frame line position indicator assigned to that active pixel group, and a transmitter 310 configured to intermittently onwardly transmit the generated data structures by pausing transmission after each data structure has been transmitted until the next data structure is ready for transmission to start.

In some embodiments of apparatus 302 for processing a serialised video stream, the receiver 304 is configured to receive a serialised video stream 104, for example, a video stream sent over an SDI link from the video source 102. The serialised video stream 104 comprises a plurality of serially transmitted video frames from the video source 102, each video frame comprising a plurality of video frame lines. The first video frame line to the last but one video frame line each comprise a group of active pixels and blanking pixels. The last frame line of each video frame comprises blanking pixels. The received video frame data may use a video transmission standard transmission link such as a serialised data interface, SDI, transmission link 103, but a different transmission link 311 may be used for the onwards transmission to viewing apparatus 312.

The memory 306 may comprise various types of memory, for example, memory for storing data including computer program code and memory such as the at least one buffer 305 arranged to buffer at least the active pixels of the received serialised video stream 103 until a complete frame line of pixels has been received from the video source 101. The one or more processor(s) or processing circuitry 308 of the apparatus 302 are configured to include for each buffered complete frame line of pixels a frame line position indicator in the onwards transmitted data. In some embodiments, the active pixels and the frame line positon indicator form a data structure. In other words, the onwards transmitted data comprises intermittently transmitted data structures, each data structure comprising that active pixel group and the frame line position indicator assigned to that active pixel group. Each data structure comprises a group of active pixels from a received frame line and omits at least one blanking pixel of that received frame line in some embodiments, however, in some embodiments, none of the blanking pixels of received video frame lines are included in the outgoing serialised video stream comprising the onwardly transmitted data structures.

In some embodiments paragraph, the frame line position indicator may be configured to indicate if the frame line is the first frame line of a frame or a subsequent frame line in the form of a binary "is a 1^{st} line" or "not a 1^{st} line" indicator, as the number of lines in a frame is known. However, in other embodiments, the specific line position in the frame may be indicated. In some embodiments, the frame line indicator may be received in the incoming video data stream from the source and retained in the outgoing onwardly transmitted data, however, in other embodiments the frame line position indicator may be assigned by the processor(s) or processing circuitry. The display of an active pixel of a first line in a received video frame accordingly allows the entire image to be properly reconstructed on a display of viewing apparatus 312.

In some embodiments, the assigned frame line indicator for each group of active pixels is included in a header or footer of the data structure including that group of active pixels, wherein the bit size of the header or footer is matched to the parallel width of a serialiser of the transmitter (310) configured to serialise the data structures in the outgoing video stream data.

The transmitter 310 is configured to onwardly transmit intermittently outgoing serialised video data comprising a sequence of data structures where there are pauses between the data structures if the next data structure is not ready for transmission when the last data structure has finished being transmitted. In other words, the transmitter is also configured to pause onwards transmission of the outgoing serialised video stream between data structures after transmitting a data structure comprising a group of active pixels and its assigned frame line position indicator until the next data structure comprising a different group of active pixels with the next frame line position indicator is ready for transmission.

The transmitter 310 may onwardly transmit the data structures as a serialised video stream 311 to a viewing apparatus 312 which includes a display, for example, a suitable raster type of display, such as a display comprising one or more LCD panels 204 shown in Figure 2.

Reference herein to a video frame line or simply a frame line refers to a horizontal video frame lines such as those shown by way of example in Figures 1A-1D, 2A and 2B which form a video frame when they are stacked vertically and displayed in sequence. In other words, in some embodiments, each video frame line comprises a horizontal line of the video frame when displayed in the usual orientation of a video screen, however, it is also possible to display frame lines in a different orientation.

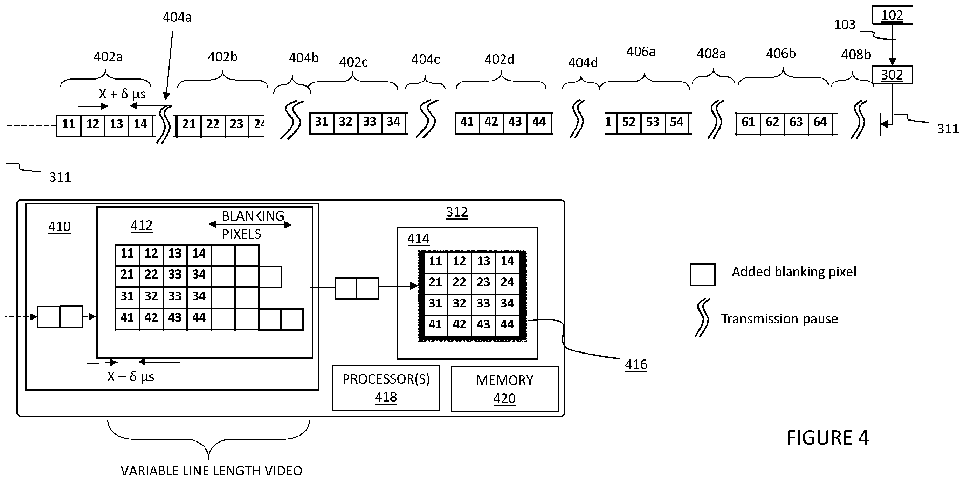

Turning now to Figure 4, this shows in more detail schematically how the apparatus 302 may pause transmission between onwardly transmitted data structures. In Figure 4, a plurality of serialised data structures 402a-402d form a video frame when displayed on a display 414 of viewing apparatus 312, and the serialised data structures 406a-406b are associated with a subsequent image frame. The data structures 404a-404d and 406a-406b are shown being serially transmitted by apparatus 302 to the viewing apparatus 312.

As illustrated in Figure 4, each data structure comprises a group of active pixel groups and related header information (the header data structures are not shown in Figure 4 for clarity). Each pixel group of a data structure 402a,404b,402c,402d is transmitted in sequence with a video frame line position indicator provided as meta-data, for example, in a header or footer of that data structure. The video frame line indicator is indicates to the viewing apparatus 312 and/or display 414 which data structure should be displayed first when reconstructing the serialised image on the display 414. Additional meta-data may be provided so that the group of active pixels of a data structure can be displayed in the correct line and the correct pixel order on the display 414 when reconstructing the video frame image 416 on the display. Each video frame in the example of Figure 4 comprises just four horizontal lines, each line having four active pixels.

Figure 4 also illustrates schematically how the apparatus 310 may pause transmission 404a-404d, 408a-408b between consecutive data structures 402a-402d, 406a-406d. As there would be normally a video frame line compromising only blanking pixels following the last but one frame line including active pixels, the pause 404d may be longer than the other pauses 404a-404c before the first row of the next video frame is transmitted in data structure 406a.

In some embodiments, the intermittently transmitted video data stream has a fixed frame line length with variable durations of transmission pauses. The pauses between the transmissions may accordingly vary based on the number of blanking pixels that are received at apparatus 302 but which are not forwarded as they are omitted from the data structures onwardly transmitted by the apparatus 302 to the viewing apparatus 312.

In some embodiments, the received video data stream has a variable line length and the duration of pauses between onwardly transmitted data structures varies. It is also possible to implement the invention where the video data stream has a fixed number of pixels in each frame line.

The outgoing serialised video stream transmission pauses between the data structures of the first video frame are labelled 404a,404b,404c,and after the last data structure 404d, after which the first data structure of the next video frame is sent, followed by a transmission pause 408a, followed by the next data structure of that next video frame 406b, after which the subsequent transmission pause is labelled 408b, and so on.

Returning now to Figure 3B of the drawings, this shows schematically an example of a method 300 performed by the apparatus 312 for processing a serialised video stream 104 for onwards transmissions according to some embodiments of the disclosed technology.

As shown in Figure 3B, the method 300 for processing a serialised video stream for onwards transmission comprises receiving a serialised video stream 314. The serialised video stream may comprise a plurality of serially transmitted video frames from a video source, for example, the video source 101 of Figure 3B. Each video frame comprising a plurality of frame lines. In embodiments where the line length is fixed, the first to last but one frame line of each video frame comprises a fixed number of active pixels for presentation on a display and the last frame line comprises a fixed number of blanking pixels. The method 300 also comprises buffering at least the active pixels of the received serialised video stream in 316 until a complete frame line of pixels has been received in 318. The method 300 further comprises processing each buffered complete frame line of pixels to associate the group of active pixels of that frame line with a frame line position indicator in 320, which may comprises assigning a frame line position indicator or reusing or retaining an existing frame line position indicator from the received incoming video data. The method 300 further comprises generating a data structure 322 comprising that active pixel group including the frame line position indicator assigned to that active pixel group. As soon as the data structure is ready for transmission 324, the method 300 further comprises onwardly transmitting 326 as outgoing serialised video data. The method then comprises checking if the next data structure is ready for transmission in 324 and if not, pausing onwards transmission of the outgoing serialised video stream 328 until the next data structure is ready for transmission in 324, at which point that data structure is transmitted in 326.

By pausing transmission between data structures 328 after transmitting a data structure comprising a group of active pixels and assigned frame line position indicator until the next data structure comprising a different group of active pixels with a different frame line position indicator is ready for transmission 324, the ongoing transmission is intermittent. However, it may be possible for the ongoing transmission to be continuous in some embodiments, if the next data structure is always ready for transmission after transmitting the previous data structure. In this case, the onwardly transmitted data may be considered to be more efficiently transmitted with lower latency as the apparatus 302 does not wait until each video frame has been received, instead the latency will depend on the delay incurred waiting until each video frame line has been received, and by removing one or more or all of the blanking pixels from each video frame line, each frame line has a smaller number of pixels to transmit, in other words, there is less data to transmit to convey the frame line to the destination.

The term "data structure" as used herein refers to structured data in the onwardly transmitted serialised video stream which comprises a group of active pixels and one or more indicators, which may also be referred to as tags, associated with that group of active pixels. Metadata, for example, one or more indicators or tags may be provided as headers preceding an associated group of active pixels in some embodiments, or as footers follow their associated group of pixels in some embodiments. In some embodiments, one or more indicators or tags may precede an associated pixel group and one or more indicators or tags may also follow the associated pixel group. References herein to a header are also references to indicators or tags provided at other positions, such as a footer, relative to the active pixel group they are associated with unless the context clearly indicates otherwise.

References to the apparatus 302 generating data structures accordingly refer to the apparatus 302 preparing structured data for output in the onwardly transmitted serialised video stream.

In some embodiments of the method 300 performed by the apparatus 302 does not include any blanking pixels from received video frame lines in the outgoing serialised video stream comprising the onwardly transmitted data structures.

In some embodiments the method 300 performed by the apparatus 302 further comprises omitting or discarding at least one blanking pixel of each received video frame line comprising a group of active pixels and at least one blanking pixel, and including the group of active pixels and any remaining blanking pixels of that received video frame line in an onwardly transmitted data structure of the outgoing serialised video stream.

In some embodiments, the duration of the onwards transmission pauses varies according to the number of blanking pixels which are present in each frame line. For example, as the last frame line consists of blanking pixels only, there will be an extra-long pause between the transmission of the data structure corresponding to the last but one frame line of a frame and the transmission of the data structure corresponding to the first line of the next frame in the onwardly transmitted video data stream.

In some embodiments, the method 300 performed by the apparatus 302 results or further comprises decoupling a source clock of the received serialised video stream 104 in the outgoing serialised video stream 311.

In some embodiments, the method 300 allows the viewing apparatus components to use a clock for processing a received serialised video stream which is not based on the clock of the apparatus containing the serialiser used to generate that serialised video stream.

In some embodiments of the method 300, onwardly transmitting the outgoing serialised video stream 311 comprises transmitting the outgoing serialised video stream over a data communications channel along a wired link to a viewing apparatus (312) configured to cause a display 416 of received video data. This provides a secure link to the display 414, however, it may not be the fastest link. In some embodiments, instead or in addition, the onwardly transmitting of the outgoing serialised video stream 311 comprises transmitting the outgoing serialised video stream 311 over a wireless data communication channel to viewing apparatus (312) configured to cause a display 416 of received video data.

In some embodiments of the apparatus 302 shown in Figures 3 and 4, none of the blanking pixels of received video frame lines are included in the outgoing serialised video stream comprising the onwardly transmitted data structures. However, it also possible to discard at least one blanking pixel from each line and to retain one or more blanking pixels so that each received variable line length is regularised to a fixed number of active and blank pixels in some embodiments. In other words, in some embodiments, at least one blanking pixel of each received video frame line comprising a group of active pixels and at least one blanking pixel is discarded and the group of active pixels and any remaining blanking pixels of that received video frame line are included in an onwardly transmitted data structure of the outgoing serialised video stream.

In some embodiments, as shown in Figure 4, whilst the average frame period is matched to that of the video source 102 the buffering and removal of blanking pixels in the outgoing serialised video transmission 311 enables the video stream received by the viewing apparatus 312 to no longer be locked to the same clock period used by the video source 104. In other words, in some embodiments the apparatus 312 decouples a source clock of the received serialised video stream 104 in the outgoing serialised video stream 311 by varying the duration of pauses between onwardly transmitted data structures.

In some embodiments, the transmitter 310 of the apparatus is configured to transmit the outgoing serialised video stream as a discontinuous serialised video stream over a data communications channel along a wired link with the viewing apparatus 312. In some embodiments, however, instead or in addition, the onwardly transmitted serialised video stream data is intermittently transmitted over a wireless data communications channel to the viewing apparatus 312 which is configured to cause a display of the received video data.

In some embodiments, as shown in Figure 4, the decoupling is implemented by the apparatus 302using a slightly different clock period X + δ, where δ is a small percentage difference in the clock period for each transmitted pixel in the onwards transmitted serialised video stream 311..

The disclosed technology also allows the clock of the receiver 410 at the viewing apparatus 302 to use a clock which is not locked to the clock period used by apparatus 302 or the clock period used by the video source 102. For example, as shown in Figure 4, a clock at the receiver 410 can run at X - δ, where δ may be the same or a different amount of drift in the clock at the receiver from the source video clock X.

The viewing apparatus 312 generates variable length video lines by adding blanking pixels after it has received the active pixels of a received data structure until the next data structure is received in the serialised video transmission 311. In other words during the pauses where no data structure is received, the receiver 410 adds one or more blanking pixels. This allows the receiver 410 to generate a continuous stream of video data as output 412 to display 414 in some embodiments by adding a sufficient number of blanking pixels to the end of the last group of active pixels received for display.

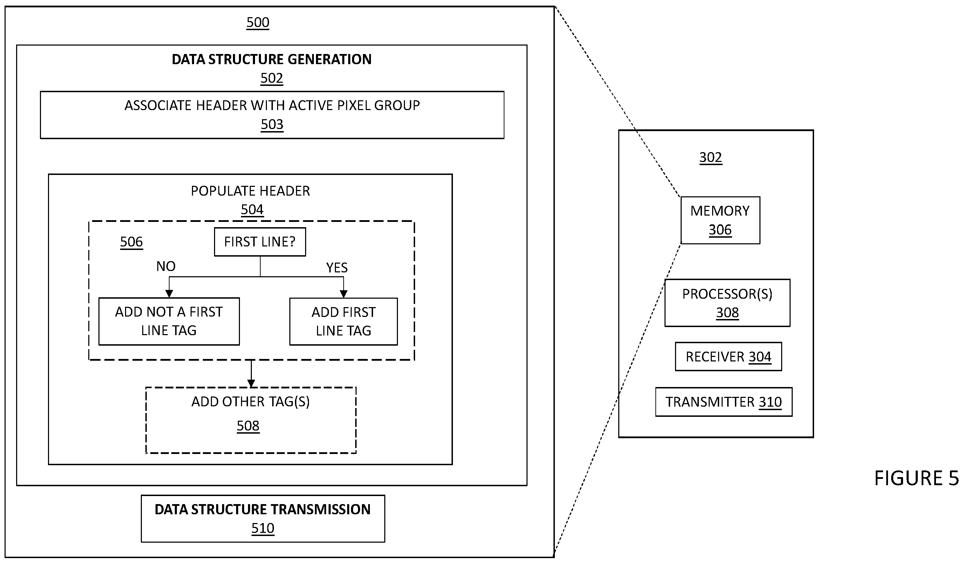

Figure 5 shows another schematic view of the apparatus 302 for serialising data for onwards transmission according to some of the disclosed embodiments of the technology. In Figure 5, the apparatus 302 shown comprises memory 306, one or more processor(s) or processing circuitry 308, a receiver 304 and a transmitter 310. The memory 306 may include buffer memory 305 but also includes suitable memory for storing computer-code 500 also shown schematically in Figure 5. The computer-program code 500, when loaded from memory 306 and executed by one or more processors or processing circuitry 308 of the apparatus 302 for processing a serialised video data stream for onwards transmission causes the apparatus 302 to implement an embodiment of the method 300 shown in Figure 3B, or a method according to any suitable one of the method aspects or thereof disclosed herein for processing a received serialised video stream for onwards transmission.

In the embodiment shown in Figure 5, computer code 500, when executed by the one or more processor(s) or processing apparatus, comprises one or more software modules or circuitry which causes the apparatus 302 to generate 502 a data structure and to transmit the data structure 504. As shown in Figure 5, the data structure generation module or circuity comprises a module or circuitry 503 which associates meta data, for example, data provided in a header or footer of a data structure with that data structures group of active pixels. Although reference below may refer to just the header of a data structure, as anyone of ordinary skill in the art would find apparent, instead of a header, a footer or other designated location in a data structure may be used, and references to the term header should be interpreted herein accordingly unless explicit reference is made to the contrary.

Computer-code 500 also comprises a module or circuitry 504 to populate a header in 504 to form structured data using the active pixels and associated meta-data, the structured data being also referred to herein as a data structure. The meta-data may comprise meta-data provided from video source 102 or generated by apparatus 302.

The header population and header association modules or circuitry 503, 504 may comprise the same module in some embodiments. The header population module or circuitry 504 populates the header with one or more indicators or tags. For example, the header may be populated with a first indicator or tag to indicate if the pixel group of that data structure comprise a group of active pixels forming a first line of the displayed video frame or not in 506. Other information required to display the active pixel group properly on a display may also be captured within the header by adding other indicators 508 (shown in Figure 5 as adding tags 508). The header may be instead or in addition comprises an footer in some embodiments, and references to header should be construed accordingly. The data structure transmission module or circuitry 510 outputs the data structures for onwards transmission to a viewing apparatus such as the viewing apparatus 312. The data structures may be output as a continuous stream of video data 311 if, after transmitting one data structure the next data structure is ready for transmission. If it is not ready for transmission, then the data structure transmission module 510 pauses the transmission until the next data structure is ready for transmission.

Figure 6 shows schematically, an example embodiment of viewing apparatus 312 in which the viewing apparatus 312 comprises a receiver 410, one or more processor(s) or processing circuitry 418, for example, a graphics processing unit, and memory 420. The receiver 410 is configured to receive serialised video data 311 from an apparatus such as the apparatus 302 of Figures 3A and 4. In some embodiments the display apparatus 312 includes a display 414 comprising one or more flat panel displays panel, such as an LCD panel or similar panel configured to received serialised video frame data. A flat-panel display may be a curved display.

At the display 414 only the active pixels are presented, with the blanking pixels being ignored or discarded. Alternatively, the display 414 may be provided on a separate device connected to the viewing apparatus 312 which receives the serialised data from the apparatus 302. In some embodiments, the display 414 may comprises a near-eye display screen or screen on a headset.

Receiver 410 is configured to receive and process a discontinuous or intermittent stream of video data 311 and when a pause in the receive data occurs, the receiver 410 is configured to add one or more blanking pixels to the end of each received data structure. The receiver 410 then outputs as a continuous stream of data each frame line comprising a group of active pixels and header or footer information indicating the line position of that group of pixels in a video frame along with one or more blanking pixels to the display 414 which is configured to cause the active pixels to be presented correctly so as to reconfigure a complete video frame to be presented in the correct order on a display 414. The display 414 discards the added blanking pixels and reconstructs each video frame 416 using the frame line position indicators to order the received active pixel groups correctly on the display.

In the example embodiment shown in Figure 6, the viewing apparatus 312 comprises a display 416, however, as mentioned above, it will be apparent to anyone of ordinary skill in the art that in some embodiments, the viewing apparatus 312 may be connected to an external display and be configured to output received video stream data to the separate display 414 rather than to provide received video stream data to an internal display such as display 414 shown in Figure 6.

The memory 420 shown in Figure 6 may store computer-code 600 which when loaded from memory 420 and executed by one or more processors 418 of an embodiment of the viewing apparatus 312 according to the disclosed technology causes the viewing apparatus 312 to implement an embodiment of a method 600 for receiving serialised video data, for example, a continuous or intermittent sequence of data structures, for presentation on a display 414. As shown in Figure 6, the computer code 600 comprises a module or circuitry 602 configured to receive a serialised video stream 311 comprising a plurality of data structures, each data structure comprising a group of at least active pixels and a header or footer indicating the line position of that group of active pixels in a video frame when displayed, for example, on display 414. The computer program code also comprises a module or circuitry 604 configured to add one or more blanking pixels to the end of the data structure, in other words, if the data structure comprises active pixels, then additional blanking pixels are added, until the next data structure is received. This may result in an entire video frame line of blanking pixels being generated after a data structure for a last but one video frame line of a video frame has been received before the first frame line of the next video frame is received.

The computer code 600 also comprises a module or circuitry 604 configure to output the active pixels of a received data structure with the line position indicator information and any added blanking pixels as a continuous stream of variable line length video data for display on display 414.

The computer-code 600 may also be provided in the form of a computer program product comprising the computer-code 600 in some embodiments of the disclosed technology.

In some embodiments, the computer-code 600 is coded in software as one or more modules, however, in some embodiments the computer code may be instead partially or completely hard-coded in circuitry. The processors or processing circuitry may be configured to control execution of the computer code which is hard or soft coded in some embodiments. In some embodiments, one or more of the processors or processing circuitry may comprise a graphics processor or dedicated graphics processing circuitry.

Some embodiments of the viewing apparatus 312 are according configured to cause the computer-code 600 to be loaded from memory 420 and executed by the one or more processors or processing circuitry 418 to implement a method 600 of processing a received serialised video stream for display. The received serialised video stream may be intermittently received in some embodiments or continuously received in some other embodiments. Some embodiments of the method comprise receiving a received serialised video stream comprising a plurality of data structures, each data structure comprising at least a group of active pixels from a video frame line and an assigned frame line position indicator for that group of active pixels, generating a complete line of video data by adding one or more blanking pixels to each active pixel group of a received data structure until a data structure comprising the next pixel group in the serialised video stream is received, and causing each complete line of video data to be output for presentation on a display at a position in a video frame indicated by the frame line position indicator assigned to the active pixels of that complete line of video data.

In some embodiments, the serialised video stream is received from an apparatus 302 according to any of the disclosed embodiments.

In some embodiments, the method further comprises determining 605a the last but one frame line of a frame has been received, generating 605b a frame line comprising blanking pixels as the last frame line of that frame and outputting 606 the frame lines of that frame as a serial data stream of pixels for presentation on a display 414.

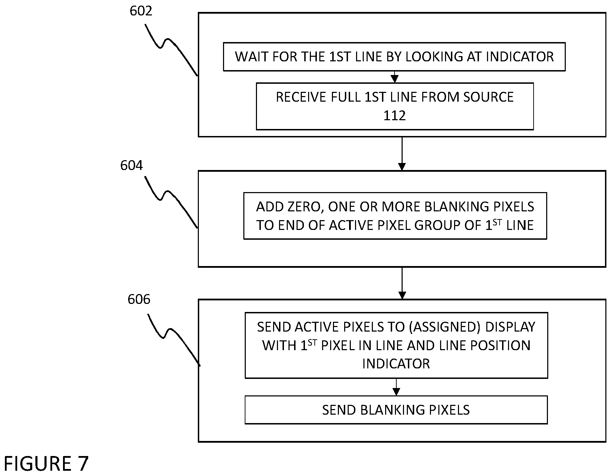

Turning now to Figure 7, this shows in more detail how the viewing apparatus 312 may process an incoming intermittent video data, for example, a discontinuous stream of serialised video data, and add blanking pixels so that a continuous stream of serialised video data comprising active and blanking pixels is output to the display 414 in the case where there is a single video source.

As shown in Figure 7, the module or circuitry 602 examines the discontinuous data stream received at the viewing apparatus 312 for header or footer information which indicates if the associated pixel group is a first horizontal line group of pixels of a video frame from the single video source 104.

In some embodiments, the frame line position indicator is a binary tag which has a first value which indicates if a pixel group either belongs to the first line of a video frame or if it does not, takes a different value for all other lines in the video frame. This allows the receiving device to output the received pixel groups in the correct order as the active pixel groups are received in sequence in the received serialised video stream 311 based on the number of lines in a frame being preconfigured.

In some embodiments of the disclosed technology, the assigned frame line indicator for each group of active pixels is included in a header of the data structure.

In some embodiments, the viewing apparatus is configured to example the received video data at a regular bit-size intervals, or chunks. If the header bit size can be matched to the bit size of a parallel width of a serialiser of the transmitter at the video source 102, so that it has the same bit size as the pixel data transmitted, the viewing apparatus can process the received data stream more efficiently as it must only examine one set bit-size interval at a time to extract header information.

In some embodiments, if the header is too small, for example, the transmitter 310 of the apparatus may pad the header with additional bits to increase it so as to allow the header information to be extracted from the pixel data stream in a more efficient manner at the viewing apparatus 312. In this case, the viewing apparatus 312 is configured to only examine data at a set bit interval, rather than being configured to look for smaller or larger bit-intervals which would increase the processing and potential latency at the viewing apparatus 312.

These line indicators are used at the interface to the display 414 where the continuous stream of video data received from the receiver 410 of the viewing apparatus 412 are presented on display 414. The viewing apparatus may buffer or discard received data until it recognises a group of pixels is preceded by a first line indicator or tag, which point it outputs the pixels to the display 414. The pixel header information may also include information about how the line is to be presented on display 414 so as to correctly present the image video frame 416, for example, which pixel should be presented first as well as the line position.

As mentioned above, in some embodiments, each data structure may instead or in addition to having a header may provide equivalent information in a footer associated with an active pixel group. Reference herein to a header should be considered to also refer to when the header is provided as a footer following a group of active pixels in the data structure. The indicators or tags which populate the header field, regardless of whether the header is provided as a header preceding a group of active pixels and/or as a footer following a group of active pixels, is used to identify which line is first line, and may in some embodiments, use a SDI standard defined technique for providing this information in the form, for example of a 64 bit header tag. The data structures of the disclosed technology may use different header or footer sizes to identify if a pixel group is a first line group of pixels in some embodiments.

In some embodiments, the header or footer is sized to same bit size as a pixel. This means that if a pixel is 20 bits, the header or footer can also be 20 bits. This makes it easier to configure the receiver of the viewing apparatus to extract the header or footer in an efficient manner as the received serialised data stream can then be captured every 20bit, 20bits, etc. If the header or footer has a different bit size to that of a pixel, for example, if the header has a size of 2 bits, this would mean that the receiver would have to capture 2 bits then 20 bits, 20bits, 20bits etc. To make the header to the same bit size as a pixel, one or more dummy bits can be added to the header by the serialiser of the transmitter.

The module or circuitry 602 shown in Figure 6 accordingly configures the receiver 410 of the viewing apparatus 312 to buffer data until a first frame line of a video frame is received. As shown in Figure 7, at the viewing apparatus 312 the receiver waits for a first frame line of a video frame in the received serialised video data by examining received data structures for a 1^{st} frame line position indicator in the header in some embodiments. Once all of the active pixels have been received for the first line of a video frame, the modules or circuitry 604, 605 configures the receiver 410 to add zero, one or more blanking pixels to follow the active pixels. These added blanking pixels cause the viewing apparatus to generate variable line length video data which allows a continuous stream of serialised frame lines is output to the display 414 in some embodiments. The module or circuitry 606 configures the receiver 410 to provide the active pixels and subsequent blanking pixels as a continuous stream of pixels which is output to the display 414 until the next group of active pixels are received and streamed to the display etc.. For example, in the example where display 414 is a raster type of display where a video line of pixels are displayed right to left, the 1st pixel sent is displays on the right, and the next pixels of the active pixel group are displayed right to left along a horizontal line.

In some embodiments, for each received pixel group which corresponds to a frame line of a video frame, once all active pixels sent to the display have been displayed, the receiver sends blanking pixels until the next frame line of that video frame can be output. Alternatively, if the last frame line output was a last but one frame line in that frame, the receiver 410 or generates an end of frame line comprising blanking pixels. In each case, the frame line data is then provided to display 414 for presentation. After each frame line of active pixels has bene presented on the display, all subsequent pixels will be treated as blanking pixels and not displayed, until the next line indicator tag is received.

The recognition of which pixel in a pixel group is the first pixel in a video frame line is done at the interface to the display and conforms to standard technology for raster type displays, for example, LCD or OLED type displays. In some embodiments, this may also be encoded within the header structure for a pixel or pixel group. In other words, it is known in the art to provide another signal to indicate to the display 414 which pixel is the first pixel of a subsequent line (so that by counting pixels, beyond a certain number of pixels, any additional pixels will be discarded as blanking pixels by the display 414). Such signals which are sent for every line are used to indicate the first pixel may conform to, for example, a standard VGA or HD signal format.

The form of the display 414 may differ in various embodiments, and may include a near-eye display in some embodiments.

Although the above embodiments refer to a single video source, in some embodiments additional data such as graphics overlay data may be provided from one or more other sources and fused with the video image data at the video source 102.

In some of the above embodiments, and in some of those described below, an additional control module or apparatus may be provided at the viewing apparatus and/or at apparatus to control the receiver and transmitter responsive to executing computer-code in order to implement the relevant methods disclosed herein at the transmitter apparatus and receiver apparatus.

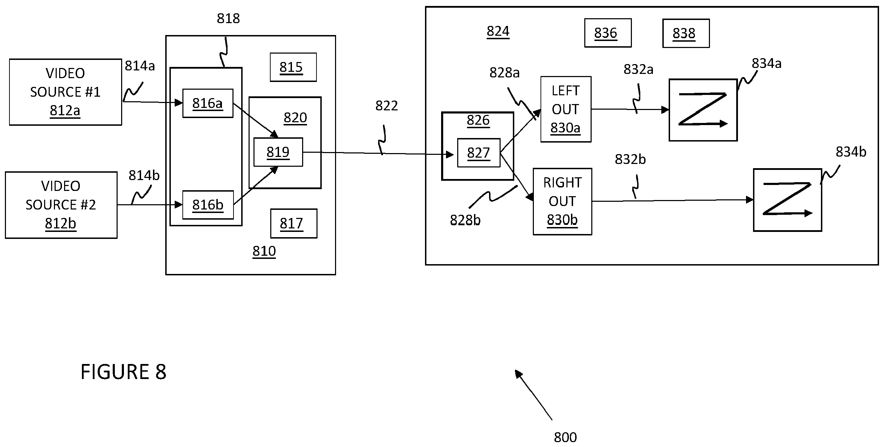

Figure 8 of the accompanying drawings shows an example embodiment of a video display system 800 according to the disclosed technology. The video display system 800 comprises a video hub, also referred to herein as a video combiner apparatus 810 according to any one of the embodiments of such an apparatus 810 disclosed herein and an viewing apparatus 824 according to any one of the disclosed embodiments of such an apparatus disclosed herein. The video combiner apparatus 810 may include one or more video sources 812a, 812b or these may be provided separately as shown in Figure 8. The video sources 812a, 812b are each configured to provide simultaneously streams of serialised video data which is intended for synchronised display on the two displays 834a, 834b at the viewing apparatus 824.
The viewing apparatus 824 may be connected to or include at least one of the two displays 834a, 834b. Each display 834a,834b is configured to present video received from one of the video sources 812a, 812b in some embodiments. The viewing apparatus may be connected to the combiner apparatus by a serialised data link such as an serialised data interface, SDI, data link. The viewing apparatus 824 may be provided as part of the video combiner apparatus 810 in which case the transmission channel 822 shown in Figure 8 may be provided over an internal wired or wireless data communications channel which may or may not conform to the SDI data standards. The display interfaces are configured to each receive serialised video data streams and present the received data on the displays without or with minimal buffering.

In one embodiment of the system shown in Figure 8 the video display system 800 comprises a video combiner apparatus 810 configured to process two serialised video data streams 814a, 814b.

Each video stream comprises video frame data captured by a video source 812a, 812b. The apparatus 810 includes a transmitter 820 including a serialiser 819 which is configured to combine the two parallel streams of video data 814a, 814b frame line by frame line into a single serialised data stream at the transmitter 820 for onwards transmission. The transmitter 820 outputs the combined serialised data for onwards transmission over a serialised data transmission channel 822 to the viewing apparatus 824. The output may comprise a continuous stream or an intermittently transmitted, discontinuous, data stream depending on the timing of when complete frame lines from either source are ready for transmission.

The combiner apparatus 810 comprises a memory 815, which may include one or more buffers 816a, 816b for buffering received video data streams 814a, 814b at a receiver 818 of the apparatus 810. The apparatus 810 also includes one or more processors or processing circuitry 817 configured to process the active pixels of the buffered data streams 819a, 818b to associated them with information such as their video source and, if not already provided, the line position in the video frame of each pixel group. The one or more processors or processing circuitry may form part of the serialiser 819 in some embodiments. The serialiser 819 may be provided as part of a transmitter 820 arranged to output video data from both buffers 816a, 816b in a serialised combined data stream 822. The buffers 816a, 816b are each arranged to process a received data stream 814a, 814b in parallel to forward data concurrently to the serialiser 819.

The viewing apparatus 824 comprises a receiver/display driver 826 configured to receive the serialised combined video stream 822 from the video combiner apparatus 810. The receiver 826 is configured to examine the header information of each received group of active pixels and includes a deserialiser 827 configured to deserialise the active pixels into two parallel channels 828a, 828b based on the header information which indicates they have different video sources 812a, 812b.References herein to "header" should also be interpreted as a reference to a footer and/or other specified location which may be used instead in some embodiments.

The receiver/LCD driver 826 also adds blanking pixels to each group of active pixels and may buffer the output until a first frame line of video data is provided so that the output 830a, 830b shown as LEFT OUT 830a and RIGHT OUT830b to each display 834a, 834b respective will display correctly.

Each output data stream 832a, 832b comprises a continuous stream of active and blanking pixels. At each of the displays 834a, 834b, the blanking pixels of each output data stream 832a, 832b are discarded and only the active pixels are presented in the appropriate order on each video frame line and each video frame line is correctly positioned in the frame.

In some embodiments, either from time to time or all the time, the disclosed viewing apparatus of Figure 8 may accordingly receive a combined data stream 822 which has undergone line-by-line interleaving of groups of pixels from the different video sources 812a, 812b t the combiner apparatus 810.In addition, by omitting at least one blanking pixel, transmission times for sending video from two sources to viewing apparatus 824 is reduced as there are fewer pixels to transmit over any shared link used for onwards transmission.

In some embodiments, the video combiner apparatus 810 may include the two or more video sources 812a, 812b, however, they may be provided separately in some embodiments. The video combiner apparatus 810 and viewing apparatus may also be combined in some embodiments.

In some embodiments, viewing apparatus 824 includes the two or more displays 834a, 834b, where each different display is configured to present video received from a different video source 812a, 812b which of video data which has been onwardly transmitted by the combiner apparatus 810 over the same video data channel 822. However, the displays may be provided separately in some embodiments.

In some embodiments, the displays 834a, 834b are provided as left and right near-eye displays such as left and right displays of a headset. The displays 834a,b may be connected to the viewing apparatus 824 but separate from the viewing apparatus 824 to make the headsets less cumbersome or for reducing the weight of the headset housing the displays 834a, 834b in some embodiments. In some embodiments, the viewing apparatus 824 may be provided a dedicated device, part of a display, implemented using a tablet or similar computer-type device ad may provide output to real screens or virtual screen partitions to replicate the left and right displays in some embodiments. However, in other use cases, the headset or near eye display may include both left and right displays, for example, if the viewing apparatus as a whole is sufficiently compact/light-weight etc. A combination of different displays may be provided in some embodiments, for example, the viewing apparatus 824 may output video to a near-eye display and simultaneously or near simultaneously to a large-format display screen if configured with a suitable driver.

The video combiner apparatus (also referred to herein as the hub) 810 may comprise a hub co-located with a surgical imaging device in some embodiments. In some embodiments where the hub 810 comprises a hub co-located with a surgical imaging device, the hub 810 is configured to receive serialised video streams from two or more video sources, for example, left view and right view video sources. In some embodiments, each video source comprises a camera and each camera is part of the surgical imaging device. In some embodiments, the hub 810 is, or is part of, a surgical imaging device comprising a surgical microscope. The hub 810 may be co-located with the surgical microscope and/or may be part of a control system or provided as other computational component or unit of the surgical microscope in some embodiments.

In the embodiment of the system shown in Figure 8, there are two separate video sources 812a, 812b are each configured to provide separate serialised variable line length video streams 814a, 814b to the combiner apparatus 810. In some embodiments, more than two video sources may be configured to provide serialised video data to video combiner 810. In some embodiments, images from each video source are synchronously presented on different displays at the viewing apparatus 824. In some embodiments, however, additional information may be added to one or more of the video data streams such as overlay image data or information etc., which may come from another source and be combined with the video image data from one of the image video sources 812a, 812b.

Overlay type information which is intended to be presented on the same display as the video images from a source 812a, 812b may be fused or otherwise integrated with the video information at the source 812a, 812b or at the combiner apparatus 810. Such overlay information may, for example, modify how a video is presented on a display, for example, it may highlight or adjust the colour or contrast of one of the images presented on one or both of the displays. Alternatively or in addition the overlay information may provide text or a symbol with a video presentation. In some embodiments, the overlay information is synchronised with two or more video sources of video data, so that the same overlay information source may be split and combined with both serialised video streams 814a, 814b in some embodiments.

In some embodiments, if the number of video sources does not match the number of separate displays, then the video data may be fused so that the active pixels presented on one of the displays is able to include data from more than one source. In this case, in some embodiments, the data structure header information may include an identifier indicating the data structure includes pixels for the overlay and image data (or other form of combined data) from both sources in some embodiments.

In some embodiments, the hub may process video data received from a source to add an overlay or image enhancement. This may be embedded in the video stream output by the hub or it may be provided as a separate stream in some embodiments.

In some embodiments of the disclosed technology the video combiner apparatus 810 comprises an apparatus 810 for combining a plurality of serialised video streams 814a,614b from at least two different video sources 812a, 812b, for example, from two different video sources 812a, 812b as shown in the embodiment of Figure 8. The video combiner apparatus 810 comprises a receiver 818 configured to receive each serialised video stream 814a, 814b from a different video source 812a, 812b over a separate channel. Each received serialised video stream comprises a plurality of video frames comprising lines of active pixels and blanking pixels. The combiner apparatus 810 also comprises one or more processors or processing circuitry 817 and memory 815. Memory 815 may include a plurality of buffers 816a, 816b, each buffer arranged to buffer at least the active pixels of a received serialised video stream 814a, 814b. The one or more processor(s) or processing circuitry 817 are configured, for each group of active pixels in a completely received line of pixels in a received frame of a received serialised video stream 814a, 814b, to assign a video source indicator to that active pixel group, to include or assign a frame line position indicator to that active pixel group, and to generate a data structure comprising the active pixel group, the source indicator of that pixel group, and the frame line position indicator assigned to that active pixel group. The combiner apparatus 810 also comprises a transmitter 820 configured to onwardly transmit as a single serialised video stream 822 the generated data structures from each received serialised video stream 814a, 814b.

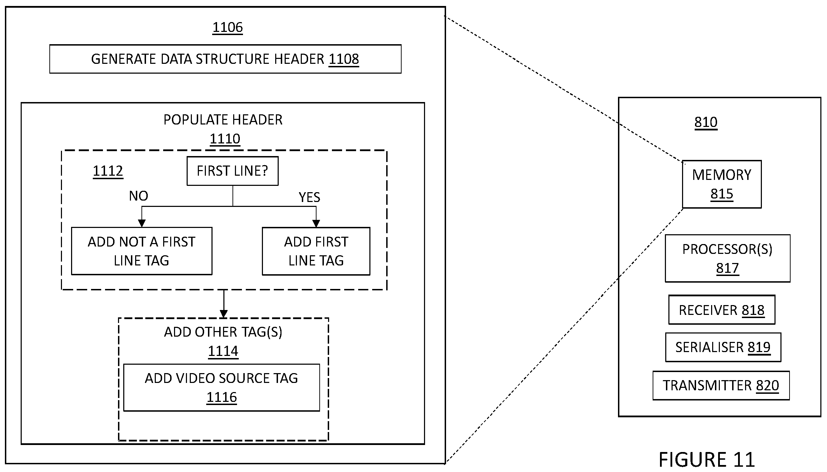

The one or more processor(s) or processing circuitry 817 may be provided as part of a transmitter 820 of the combining apparatus 810 in some embodiments. The one or more processors or processing circuitry may be configured in some embodiments, for example by loading and executing computer program code such as that shown in Figure 11 as computer code 1106 which may be stored in a suitable form of memory 815.

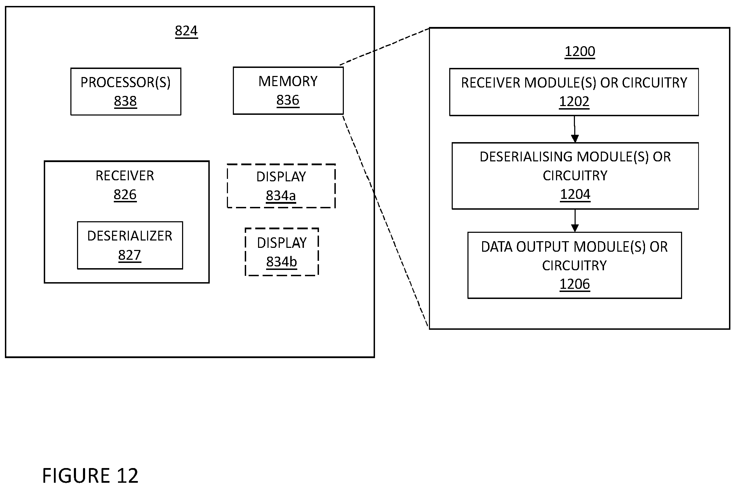

At the viewing apparatus 824, one or more processor(s) or processing circuitry 836 may also be provided, for example, as part of the receiver 826 or deserialiser 827 in some embodiments. The one or more processors or processing circuitry 836 may be configured in some embodiments, for example by loading and executing computer program code such as that shown in Figure 12 as computer code 1200 from suitable form of memory 838 to cause the viewing apparatus to implement a method for viewing a plurality of serialised video streams received as a single serialised combined video stream. For example, in some embodiments, the method comprises receiving a serialised video stream comprising a plurality of data structures, each data structure comprising an active pixel group, a source indicator assigned to that pixel group, and a frame line position indicator assigned to that active pixel group; and processing the received serialised video stream by generating a complete line of video data by adding one or more blanking pixels to each active pixel group of a received data structure until a data structure comprising the next pixel group in the serialised video stream is received and causing each complete line of video data to be output by for presentation on a display associated with the source indictor of that complete line of video at a position in a video frame indicated by the frame line position indicator assigned to the active pixels of that complete line of video data.

In some embodiments, the viewing apparatus 824 comprises a receiver 826 configured to receive a serialised video stream 822 comprising data from a plurality of different sources 812a, 812b, for example, a combined serialised video stream 822 from the combiner apparatus 810. The serialised video stream 822 comprises a plurality of data structures, each data structure comprising an active pixel group, a source indicator assigned to that pixel group, and a frame line position indicator assigned to that active pixel group. The viewing apparatus 824 also comprises one or more processors or processing circuitry 836 configured to generate a complete line of video data by adding one or more blanking pixels to each active pixel group of a received data structure until a data structure comprising the next pixel group in the serialised video stream is received. Each complete line of video data is then provided for presentation on a display 834a, 834b associated with the source indictor of that complete line of video at a position in a video frame indicated by the frame line position indicator assigned to the active pixels of that complete line of video data.

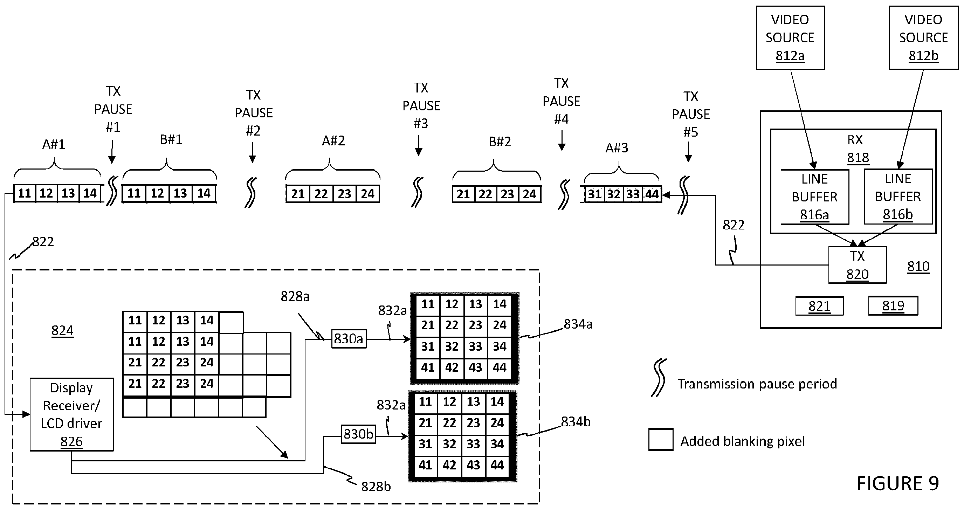

Figure 9 of the accompanying drawings illustrates schematically how, in some embodiments of operation of the combiner apparatus 810, for example, the embodiment of apparatus 810 shown schematically in Figure 8, from time to time the transmitter 820 may pause onwards transmission between data structures.

In Figure 9, serialiser 819 is not illustrated for clarity. The pauses are labelled TX PAUSE #1 to #5 and may occur from time to time in between the transmission of data structures or all the time between data structures. In Figure 9, the data structures are labelled A#1, B#1, A#2, B#2, A#3, where A# indicates the data structure comprises active pixels originating from video data source 812a and B# indicates the data structure comprises active pixels originating from 812b.

Depending on the timing to transmit data structures and how long it takes for the next data structure to be ready for transmission after the end of transmitting the previous data structure, the transmission pauses may occur at regular or irregular intervals.

Each comprising a group of active pixels is assigned source indicator at the combiner apparatus before it is onwards transmitted which is included in the header of that pixel group. Additional header information may include a frame-line position indicator for that pixel group and any other header information which may be retained from the received serialised data from the video source. In some embodiments, transmission of a frame line from one source 812a for example, may be completed before a next data structure comprising a different group of active pixels with a different source indicator #B is ready for transmission, in which case rather than pause, if another data structure from the first source is ready for transmission that is transmitted instead, rather than wait for the other source frame line to be ready.

As shown in Figure 9, a first frame line from a first source, for example, video source 812a, is transmitted (this is labelled A#1 in Figure 9). A transmission pause labelled TX #1 then occurs as there is no subsequent data structure ready for transmission. However, as soon as the subsequent data structure B#1 is ready for transmission it is output along serialised video data link 822. In the illustrated example, the next data structure ready for transmission is labelled B#1, and after it is transmitted another pause occurs, pause #2, data structure #A2 is ready for transmission and this is then transmitted and another pause #3 occurs before B#2 is ready for transmission and then transmitted, after this pause #4 occurs and the data structure A#3 is then transmitted followed by another pause.

However, the transmitter 820 may emit a continuous stream of pixels by alternating which sources pixel groups are transmitted so that after transmitting a data structure comprising the active pixels of a video frame from a first video source 812a, the transmitter next emits a data structure comprising the active pixels of a video frame from the other video source 812b if this is ready for transmission by the time it has finished transmitting the data structure comprising pixels from the first video source 812a. In other words, some or none of the pauses shown may occur in some examples of the disclosed technology and the sequence of frame lines may not strictly alternate from one source to another.

In some embodiments, each frame line of comprises a horizontal line of the video frame when displayed.

In some embodiments, the video source indicator identifies a spatial relationship between at least two of the plurality of video sources. For example, as shown in Figure 8, the two video sources 812a, 812b provide left and right views of a scene in some embodiments, and a receiver 826 of the viewing apparatus 824 is configured to examine the received video stream 822 for indicators for each video source and assigns the active pixel group of the data structure associated with that source indicator to one of the two displays 834a, 834b accordingly.

In some embodiments, the plurality of serialised video streams 814a, 814b comprise a video stream obtained from a video source for a left side view of a scene and a video stream obtained from a video source for a right side view of a scene, and different video source indicators are used to identify if a pixel group belongs to a frame of video obtained from a video source for the left side or right side view of the scene.

In some embodiments, the assigned video source indicator and the frame line position indicator are included in a header of a data structure and wherein the bit size of the header is matched to the parallel width of a serialiser of the transmitter 820 configured to combine data structures from a plurality of different video sources 812a,812b into one outgoing serialised video stream 822.

In some embodiments, data structures from the two sources 812a, 812b are interleaved by the serialiser in the outgoing serialised video stream 822.

In some embodiments, the interleaving alternates a data structure from one video source with a data structure from another video source in the outgoing serialised video stream. In some embodiments, if a data structure from another video source is not yet ready for transmission, the transmitter 820 will pause transmission until it is ready for transmission. Alternatively, the transmitter may transmit a data structure derived from a frame line of the same source as the previous transmitted frame line in some embodiments.

The apparatus 810 may be configured to receive least one serialised video stream 814a, 814b over a channel having one or more of a different data rate and a different video resolution to at least one other channel via which another received video stream 814a, 814b is received.

Whilst latency at the displays 834a, 834b is better reduced by removing all of the blanking pixels in a received video frame line at the apparatus 810, so that preferably none of the blanking pixels of received video frame lines are included in the outgoing serialised video stream 822 comprising the onwardly transmitted data structures, similar benefits in a reduction of latency can be object by removing instead at least one blanking pixel of each received video frame line comprising a group of active pixels and at least one blanking pixel is discarded and the group of active pixels and any remaining blanking pixels of that received video frame line are included in an onwardly transmitted data structure of the outgoing serialised video stream.

In some embodiments, the video combiner apparatus 810 decouples the source clocks of the received serialised video streams in the outgoing serialised video stream by switching between the different video sources when combing the serialised video data for onwards transmission and/or by pausing transmission of data structures if a data structure is not yet ready for transmission after the previous data structure has been transmitted. In some embodiments, the receiver and source clocks are accordingly decoupled and may be further decoupled by varying the duration of pauses between onwardly transmitted data structures. The transmitter clock of the serialiser 819 may also be decoupled accordingly from the clock at the receiver 826 of the viewing apparatus 824.

In some embodiments, the transmitter 810 is configured to transmit the outgoing serialised video stream over a data communications channel 822 along a wired link and/or over a wireless data communications channel to a viewing apparatus 824 which is configured to cause a display of received video data.

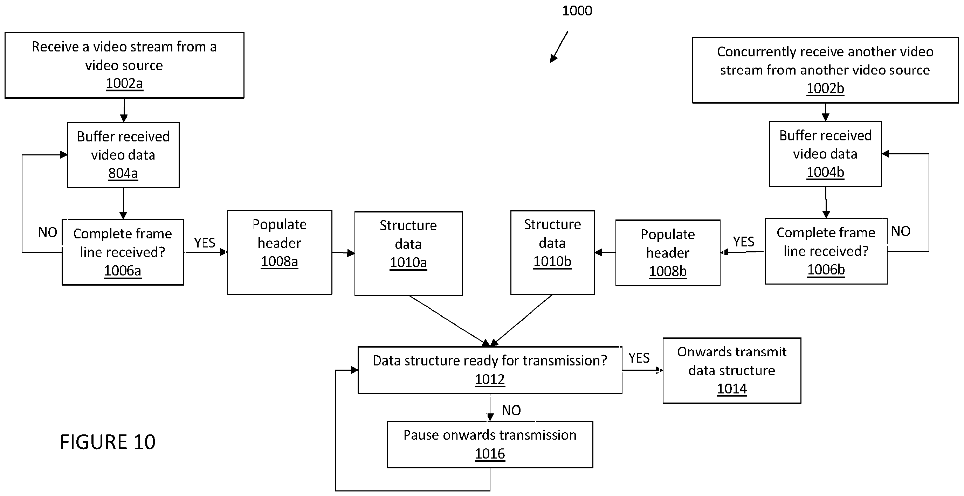

Figure 10 if the accompanying drawings shows an example embodiment of a method 1000 performed by the combiner apparatus 810 configured to combine two parallel streams of serialised video data. As shown in Figure 10, the method 1000 comprises receiving 1002a a video stream from a video source, for example, video source 812a as shown in Figure 8 or 9 and concurrently receiving 1002b a video stream from another video source, for example, video source 812b as shown in Figures 8 or 9. Each stream is then separately buffered 804a, 804b until a complete video frame line is received in 1006a, 1006b at which point, in some embodiments, a header associated with the active pixels of each video frame line is populated 1008a, 1008b with indicators or tags providing an indication of the video source of the video frame of each group of active pixels. The header may already include or be assigned a video frame line indication and any other relevant information such as which pixel in the active pixel group is the first pixel which should be eventually presented on a display of the video frame at viewing apparatus 824. A data structure comprising the active pixels and the header information is then generated 1010a 1010b, and which ever one of the two resulting data structures is next ready for transmission 1012 is onwardly transmitted in 1014, for example, towards the viewing apparatus 824 shown in Figures 8 and 9. The other data structure may be buffered until it can be transmitted in some embodiments in which case the onwards transmission may be continuous from one data structure to another data structure, and the data structures may alternate sources in some embodiments. If there is no data structure from either source ready for transmission after the previous data structure has been transmitted, then the transmitter may pause transmission 1016 until the next data structure is ready for transmission.

As any pauses in transmission disrupt the timing of the pixel groups being transmitted from their originating clock timing, the clock at the viewing apparatus can become decoupled from the transmission clock at the originating video source 812a, 812b.

In some embodiments, the method 1000 comprises combining a plurality of serialised video streams 814a,814b from different video sources 812a, 812b, each serialised video stream being received over a different communications channel, for serialised onwards transmission over a channel. The method comprises in some embodiments, separately receiving 802a, 802b each one of the plurality of serialised video streams, separately buffering 804a, 804b at least the active pixels of a received frame line of a serialised frame of each of the plurality of received video streams, processing each buffered group of active pixels in a completely received frame line by at least: assigning 808a, 808b a video source indicator to that active pixel group, and generating 810a, 810b a data structure comprising the active pixel group, an indicator for the video source of that pixel group, and a frame line position indicator for that active pixel group, and onwardly transmitting the generated data structure including buffered active pixels from a frame line of a video frame of one of the plurality of received serialised video streams over the common channel.

In some embodiments of the method 1000, the method further comprises after each data structure has been transmitted, determining if another data structure from a video frame line of a video frame originating from another one of the plurality of video sources is ready for onwards transmission to start, and if so, onwardly transmitting the data structure from the other one of the plurality of video sources over the common channel or else determining if another data structure from the one of the plurality of video sources is ready for transmission and if so, onwardly transmitting the data structure from the one of the plurality of video sources over the common channel.

In some embodiments of the method, after a data structure has been transmitted, the method further comprises determining that there are no data structures from any of the plurality of video sources ready for transmission, pausing transmission until a data structure from a video source of the plurality of video sources is ready for transmission, and onwardly transmitting the data structure over the common channel.

Figure 11 shows schematically how the apparatus 812 may include computer code 1106, for example, in the form of a computer program stored in memory or configured in hardware, which is executable by the one or more processors or processing circuitry 817. The computer program code comprises one or more modules or circuitry in some embodiments which control various components of the combiner apparatus 810 to implement a method such as method 1000 shown in Figure 10.

Figure 11 illustrates how the computer code 1106 may comprise one or more modules or circuitry 1108 which when executed cause a data structure to be generated with a header and one or more modules or circuitry 1110 which when executed cause the header to be populated. In some embodiments, the computer code 1110 comprises one or more modules or circuitry 1202 configured when executed to cause the combiner apparatus 810 to determine or check for the existence in the received video data stream of an indicator of the video line position in the frame of the active pixel group. The frame line indicator is included in the onwardly transmitted data structure and may indicate, for example, if the active pixels of the video frame line belong to the 1^{st} line of the video frame or not.

If there is no frame line position indicator already associated with the active pixel group, the header is populated with a frame line indicator. The frame line indicator may comprise a binary indicator in some embodiments of whether that frame line is a 1^{st} frame line or not a 1^{st} frame line.

The computer code 1106 also comprises one or more modules or circuitry configured 1204 which when executed cause the header to be populated with any other relevant information. For example, the computer code 1106 may comprise one or more modules or circuitry configured when executed to cause an indicator or tag to be added to the header in 1116 to identify the video source of the active pixel group or an indicator, where the viewing apparatus is configured to send active pixels associated with a particular video source identifier to a particular one of its displays 834a,b. Alternatively or in addition, the indicator or tag may identify the display on which the active pixel group is to be displayed in some embodiments in which case the viewing apparatus, on detecting a particular display indicator, is configured to forward the received active pixels having that particular display indicator (and any added blanking pixels) to that particular display.

In some embodiments, the other relevant information may include an indicator or tag is added to indicate which pixel is to be displayed first in each line and/or the direction in which the line is to be presented on the display, for example, left to right etc.

As would apparent to anyone of ordinary skill in the art, in the above embodiments, the header may instead or additionally be provided as a footer, or located at another predetermined position relative to the active pixel groups in the data structure which is onwardly transmitted.

Figure 12 shows schematically how the viewing apparatus 824 comprises one or processors or processing circuitry 838, memory 836, and a receiver 828, for example a receiver/driver for a plurality of displays 834a, 834. As shown in Figure 12, the displays are included in the viewing apparatus but they may be separate displays in some embodiments. The viewing apparatus 824 may be configured to receive video routed from the combining apparatus 810 in some embodiments. In some embodiments, the displays 834a, 834b comprise left and right near-eye displays in a head-set or similar near eye display viewing apparatus.

As shown in Figure 12, the memory 836 include memory storing computer code 1200. The computer code 1200 may comprise one or more modules or circuitry 1202, 1204, 1206 configured, when executed by the one or more processors or processing circuitry 838 to cause the viewing apparatus 824 to perform a method for viewing a plurality of serialised video streams received as a single serialised video stream.

In some embodiments, for example, the computer code comprises one or more receiver modules or circuitry 1202 which when executed causes the viewing apparatus 824 to receive a serialised video stream 822 comprising a plurality of data structures, each data structure comprising an active pixel group, a source indicator assigned to that pixel group, and a frame line position indicator assigned to that active pixel group. The computer program code may also comprise one or more deserialising modules or circuitry 1204 configured when executed by the viewing apparatus 824 or by a deserialiser 827 of the apparatus 824 to process the received serialised video stream 822 to generate a complete line of video data by adding one or more blanking pixels to each active pixel group of a received data structure until a data structure comprising the next pixel group in the serialised video stream is received.

The computer program code may also comprise one or more data output modules or circuitry 1206 configured when executed to cause each complete line of video data to be output for presentation on a display 834a, 834b associated with the source indictor of the active pixels at a position in a video frame indicated by the frame line position indicator assigned to the active pixels of that complete line of video data.

In the above embodiments the video received by the apparatus 302, 802 from the one or more video sources 102, 812a, 812b may be received over a SDI link 14 from the video sources. The memory 306 may include suitable read-only memory and/or random access memory which stores computer code for execution by one or more processors or processing circuitry 308. Memory 306 may also comprise at least one line buffer 305, 816a, 816b for storing each horizontal line of video data as it is received from video source 102, 812a, 812b over a SDI link. When the buffers 306, 816a, 816b are full, in other words, when a complete horizontal line of active and blanking pixels has been received, the blanking pixels are discarded or otherwise ignore or removed and an active pixel group are processed for onwards transmission. In some embodiments the onwards transmission may not include any pauses and may be continuous. In some embodiments, some data structures may be transmitted without a pause if they are buffered and ready for transmission when the previous data structure has finished being transmitted by the apparatus 310, 810, however, from time to time, if no data structure is ready, there may be a pause.

The displays 414, 834a, 834 may comprise any suitable type of display, for example, a raster scan type of display, for example, one which uses a liquid crystal display, LCD, or light emitting diode, LED, or OLED, or organic light emitting diode technology to display video.

The video data is serially transmitted is transmitted pixel by pixel over the serialised data interface, SDI, links or channels. The order in which the bits which may up each pixel, typically 24 bits, is transmitted may be determined differently by different communication protocols. If serialised however most significant bit of each pixel sent first, with the remaining pixels sent one by one until the last pixel has been sent. Serialised video streams, depending on the video resolution required, may run at speeds of up to 6 Gbit/s or 12Gbit/s.

In some embodiments, the transmission time for each frame varies and only an averaged frame period for the onwards transmission is matched by the apparatus 310, 810 to the frame period of the video received from a video source 102, 812a,812b. In other words, the source clock used to transmit each pixel by apparatus 310, 810 does not need to be the same as the display clock used to receive each transmitted pixel at display 314, 834a, 834b.

In Figures 3A and 8, transmitter 312 and 820 respectively are configured to ensure the average transmitted frame period is matched to the transmission time of the or each video source. In other words, the disclosed transmitters 312 and 820 are configured to allow the transmission periods of individual pixels in the video frame to differ in some embodiments. In the embodiments described herein, idle periods during transmission are used to compensate for extra/less active pixels from the video source(s) due to clock differences between the apparatus 310, 810 and the source 102 in some embodiments.

For example, referring back now again to Figure 4, although the following is also relevant for embodiments where video from two sources is being combined, in pixel group 402a, by way of an example embodiment, the clock period used to transmit the pixels may be X =0.1000 µs plus δ = 0.0001 µs, in other words, the clock is X + δ = 0.10001 µs, whereas the clock period of the receiver of display 312 used to receive the pixel of the blanking line may be X =0.1000 µs less δ = 0.0001 µs in other words X - δ = 0.999µs. In other words, in some embodiments of the disclosed technology, a receiver 410, 824 of the viewing apparatus 410, 824 uses a local clock to drive output to the displays 414, 834a, 834b, in other words, the viewing apparatus can use a local clock to drive the rate at which pixels are presented on the displays, e.g. LCD panel(s), and does not need to derive the clock from the transmitter 310, 820. This allows the transmission times for individual frames to vary within certain levels of tolerance, in other words, as long as on average the frame transmission duration does not overly vary.

The variations in the arrival time of each horizontal line of serialised video data is compensated for by varying the blanking periods which are added by the driver 412, 824 of the display to the end of each received active pixel group 402a-402d of a video frame. As mentioned above, these blanking pixels are not displayed but may compensate for the differences between the receiver clock of the viewing apparatus 410, 824, and the source clock at the transmitter 310, 820 and/or the source clock of the video source 102, 812a,812b.

As the blanking pixels added by the display are used to compensate for the different video line arrival times at the display, even if there are two or more separate sources of video, the pixels which form the pixel columns output on the display panel(s) 414, 834a, 834b of the viewing apparatus 410, 824 can be synchronised at the display.

Some embodiments of the disclosed technology are configured to provide video output to viewing apparatus 410, 824 which is configured to drive a display 414, 834a, 834b, for example, a LCD panel display, with variable length horizontal video frame lines. In some embodiments, the variable length horizontal frame lines are set to catch up with source video horizontal timings, but this is not necessary just to lock into the video source clock timing. Some embodiments accordingly may use a proprietary serial data interface type of video transport method which does not require locking to a video source clock at the display.

In some embodiments, the viewing apparatus 410, 824 is configured, for each pixel group comprising a horizontal line of active pixels received from an apparatus 310, 810, to automatically add a variable number of video blanking pixels until the last active pixel of the next complete video line is received. Advantageously this may allow error correction to be performed on the next received video frame line.

In some embodiments of the disclosed technology apparatus 302 receives two serialised video streams from different sources. Figure 5 of the accompanying drawings shows an example embodiment of apparatus 302 comprising an apparatus 510.

In some embodiments, the video data which is onwards transmitted is compressed and the one or more communications links are configured to have a total active bandwidth less than the sum of the active bandwidths of each source.

The video source 12, 512a, 512b may be a RGB camera source in some embodiments. In some embodiments the display 312 or display system 518 comprises a near-eye display, for example, a stereoscopic near-eye display.

The displays may comprise micro-displays or liquid crystal displays, which specify a fixed number of blanking pixel are to follow a video line of active pixels, for example, 1920 active pixels followed by 40 blanking pixels, however, it has been found that the disclosed viewing apparatus may provide 1920 active pixels followed by 39 or 41 blanking pixels etc., without visibly affecting how the video is displayed. Accordingly, there is no need for the viewing apparatus to add a fixed number of blanking pixels to the end of each active pixel group in some embodiments. Advantageously, the disclosed embodiments, of the combiner apparatus 810 which receives video from two or more sources enables two or more video sources 812a, 812b to have an independent clock and still share same transport cable. In some embodiments, an additional video frame buffer may be used, but where such a frame buffer is not needed the video received by the display 16, 518 may have a low or very low latency, for example of the order of 10s of µs.

The above disclosed embodiments may allow a display such as an LCD panel no longer needs to source its clock from the source of the video it is receiving for display. In contrast to using a conventional SDI transmitter which requires the source video clock to be locked to, the disclosed technology allows the transmission of video from two or more different video sources over the same or different physical channels even if the video sources are not clock synchronized. In addition, by transmitting data line by line in the manner disclosed herein, the long latencies that are required if a conventional SDI transmitter is used can be avoided, as it is no longer necessary to have a video frame buffer.

In some embodiments, the displays 834a, 834b comprise diode-technology based near-eye stereoscopic displays for example, an LCD or OLED display.

The program code mentioned above may also be provided as a computer program product, for instance in the form of a data carrier carrying computer program code or code means for performing the embodiments herein when being loaded into the processing circuitry in the control unit. The data carrier, or computer readable medium, may be one of an electronic signal, optical signal, radio signal or computer-readable storage medium. The computer program code may e.g. be provided as pure program code in the control unit or on a server and downloaded to the control unit. Thus, it should be noted that the functions of the control unit may in some embodiments be implemented as computer programs stored in memory, for example, a computer readable storage unit, for execution by processors or processing modules, e.g. the processing circuitry in the control unit.

Those skilled in the art will also appreciate that the processing circuitry and the memory or computer readable storage unit described above may refer to a combination of analog and digital circuits, and/or one or more processors configured with software and/or firmware, e.g. stored in a memory, that when executed by the one or more processors such as the processing circuitry perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

The control unit in some embodiments may also comprise or be capable of controlling how signals are sent along communication links 103, 822 which may be wired or wireless communication links. If the signals are sent wirelessly the control unit may suitably also control operation of an antenna.

A communication channels may be point-to-point, or networks, for example, over cellular or satellite networks which support wireless communications. The wireless communications may conform to one or more public or proprietary communications standards, protocols and/or technologies, including but not limited to Global System for Mobile Communications (GSM), Enhanced Data GSM Environment (EDGE), high-speed downlink packet access (HSDPA), wideband code division multiple access (W-CDMA), code division multiple access (CDMA), time division multiple access (TDMA), Bluetooth, Wireless Fidelity (Wi-Fi) (e.g., IEEE 802.11a, IEEE 802.11b, IEEE 802.11g and/or IEEE 802.11n), voice over Internet Protocol (VoIP), Wi-MAX, a protocol for email (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), and/or Instant Messaging and Presence Service (IMPS)), and/or Short Message Service (SMS)), or any other suitable communication protocol, including communication protocols not yet developed as of the filing date of this document.

The operating systems of the disclosed technology may require various other software components and/or drivers for controlling and managing general system tasks (e.g., memory management, storage device control, power management, etc.) and to facilitate communication between various hardware and software components in some embodiments which are not shown in the drawings when their inclusion would be apparent for the sake of clarity.

Where the disclosed technology is described with reference to drawings in the form of block diagrams and/or flowcharts, it is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

The description of the example embodiments provided herein have been presented for the purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products. It should be appreciated that the example embodiments presented herein may be practiced in any combination with each other.

It should be noted that the word "comprising" does not necessarily exclude the presence of other elements, features, functions, or steps than those listed and the words "a" or "an" preceding an element do not exclude the presence of a plurality of such elements, features, functions, or steps. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of methods, and may refer to elements, functions, steps or processes, one or more or all of which may be implemented in one aspect by a computer program product, embodied in a computer-readable medium, including computer-executable instructions, such as program code, executed by computers in networked environments.

A computer-readable medium may include removable and non-removable storage devices including, but not limited to, Read Only Memory (ROM), Random Access Memory, RAM), which may be static RAM, SRAM, or dynamic RAM, DRAM. ROM may be programmable ROM, PROM, or EPROM, erasable programmable ROM, or electrically erasable programmable ROM, EEPROM. Suitable storage components for memory may be integrated as chips into a printed circuit board or other substrate connected with one or more processors or processing modules, or provided as removable components, for example, by flash memory (also known as USB sticks), compact discs (CDs), digital versatile discs (DVD), and any other suitable forms of memory. Unless not suitable for the application at hand, memory may also be distributed over a various forms of memory and storage components, and may be provided remotely on a server or servers, such as may be provided by a cloud-based storage solution. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

The memory used by any apparatus whatever its form of electronic apparatus described herein accordingly comprise any suitable device readable and/or writeable medium, examples of which include, but are not limited to: any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry. Memory may store any suitable instructions, data or information, including a computer program, software, an application including one or more of logic, rules, code, tables, etc. and/or other instructions capable of being executed by processing circuitry and, utilized by the apparatus in whatever form of electronic apparatus. Memory may be used to store any calculations made by processing circuitry and/or any data received via a user or communications or other type of data interface. In some embodiments, processing circuitry and memory are integrated. Memory may be also dispersed amongst one or more system or apparatus components. For example, memory may comprises a plurality of different memory modules, including modules located on other network nodes in some embodiments.

In the drawings and specification, there have been disclosed exemplary aspects of the disclosure. However, many variations and modifications can be made to these aspects which fall within the scope of the accompanying claims. Thus, the disclosure should be regarded as illustrative rather than restrictive in terms of supporting the claim scope which is not to be limited to the particular examples of the aspects and embodiments described above. The invention which is exemplified herein by the various aspects and embodiments described above has a scope which is defined by the following claims.

## Claims

1. An apparatus (810) for combining a plurality of serialised video streams from different video sources (812a,812b), each serialised video stream being received over a different communications channel, for serialised onwards transmission over a channel (622), the apparatus comprising:
a receiver (818) configured to separately receive each one of the plurality of serialised video streams;
a plurality of buffers (816, 816b), each buffer arranged to buffer at least the active pixels of a received frame line of a serialised frame of one of the plurality of received video streams;
one or more processor(s) or processing circuitry (821) configured, for each group of active pixels in a completely received line of pixels in a received frame of a received serialised video stream, to:
assign a video source indicator to that active pixel group; and
generate a data structure comprising the active pixel group, the source indicator assigned to that pixel group, each data structure omitting at least one blanking pixel of that completely received frame line and a frame line position indicator for that active pixel group; and
a transmitter (620) configured to onwardly transmit the generated data structures of both received serialised video streams over the common channel (822).

2. The apparatus of claim 1, wherein the transmitter is configured to pause transmission after a data structure from one video source has been transmitted until the next data structure from another video source or from the same video source is ready for transmission to start.

3. The video combiner apparatus (810) of claim 1, wherein the video source indicator identifies a spatial relationship between at least two of the plurality of video sources.

4. The video combiner apparatus (820) of any one of claims 1 to 3, wherein the assigned video source indicator and the frame line position indicator are included in a header of a data structure and wherein the bit size of the header is matched to the parallel width of a serialiser (821) of the transmitter (820) configured to combine data structures from a plurality of different video sources (812a,612b) into one outgoing serialised video stream (822).

5. The video combiner apparatus (820) of any one of claims 1 to 4, wherein data structures from the two sources (812a, 612b) are interleaved by the serialiser (821) in the outgoing serialised video stream (822).

6. The video combiner apparatus (820) of any of the previous claims, wherein at least one received serialised video stream (814a, 614b) is received over a channel having one or more of:
a different data rate; and
a different video resolution;
to the data rate or video resolution of at least one other channel via which another received video stream is received.

7. The video combiner apparatus (820) of claim 1, wherein none of the blanking pixels of received video frame lines are included in the outgoing serialised video stream (822) comprising the onwardly transmitted data structures.

8. The video combiner apparatus (820) of any one of claims 1 to 7, wherein the transmitter (810) is configured to transmit the outgoing serialised video stream over a data communications channel along a wired link and/or over a wireless data communications channel to an apparatus (834) configured to cause a display of received video data.

9. A viewing apparatus (824) comprising:
a receiver (826) configured to receive a serialised video stream (822) comprising a plurality of data structures, each data structure comprising an active pixel group, a source indicator assigned to that pixel group, and a frame line position indicator assigned to that active pixel group; and
one or more processors or processing circuitry (836) configured to:
generate a complete line of video data by adding one or more blanking pixels to each active pixel group of a received data structure until a data structure comprising the next pixel group in the serialised video stream is received; and
cause each complete line of video data to be output by for presentation on a display (834a, 834b) associated with the source indictor of that complete line of video at a position in a video frame indicated by the frame line position indicator assigned to the active pixels of that complete line of video data.

10. The viewing apparatus (824) of claim 6, wherein the received serialised video stream (822) is received from an apparatus (810) according to any one of claims 1 to 5, wherein the received intermittently transmitted serialised video data is processed by the one or more processors or processing circuitry (836) to add a variable number of blanking pixels for output as a continuous serialised video stream to the display..

11. An method (800) for combining a plurality of serialised video streams (814a,814b) from different video sources (812a, 812b), each serialised video stream being received over a different communications channel, for serialised onwards transmission over a shared channel, the method comprising:
separately receiving (802a, 802b) each one of the plurality of serialised video streams;
separately buffering (804a, 804b) at least the active pixels of a received frame line of a serialised frame of each of the plurality of received video streams;
processing each buffered group of active pixels in a completely received frame line by at least:
assigning (808a, 808b) a video source indicator to that active pixel group; and
generating (810a, 810b) a data structure comprising the active pixel group, an indicator for the video source of that pixel group, and a frame line position indicator for that active pixel group; and
onwardly transmitting the generated data structure including buffered active pixels from a frame line of a video frame of one of the plurality of received serialised video streams over the common channel.

12. The method (800) of claim 11, wherein the method further comprises after each data structure has been transmitted, determining if another data structure from a video frame line of a video frame originating from another one of the plurality of video sources is ready for onwards transmission to start, and if so, onwardly transmitting the data structure from the other one of the plurality of video sources over the common channel or else determining if another data structure from the one of the plurality of video sources is ready for transmission and if so, onwardly transmitting the data structure from the one of the plurality of video sources over the common channel.

13. The method of claim 12, wherein after a data structure has been transmitted:
determining that there are no data structures from any of the plurality of video sources ready for transmission;
pausing transmission until a data structure from a video source of the plurality of video sources is ready for transmission; and
onwardly transmitting the data structure over the common channel.

14. A method for viewing a plurality of serialised video streams received as a single serialised video stream, the method comprising:
receiving a serialised video stream (822) comprising a plurality of data structures, each data structure comprising an active pixel group, a source indicator assigned to that pixel group, and a frame line position indicator assigned to that active pixel group; and
processing the received serialised video stream (822) by:
generating a complete line of video data by adding one or more blanking pixels to each active pixel group of a received data structure until a data structure comprising the next pixel group in the serialised video stream is received; and
causing each complete line of video data to be output by for presentation on a display (834a, 834b) associated with the source indictor of that group of active pixels at a position in a video frame indicated by the frame line position indicator assigned to the active pixels of that complete line of video data.

15. A video display system, wherein the video display system comprises:
a video combiner apparatus according to any one of claims 1 to 8; and
an viewing apparatus according to any one of claims 9 or 10.
